(19)

**Europäisches Patentamt**
**European Patent Office**
**Office européen des brevets**

(11)  **EP 3 916 674 B1**

(12)  # EUROPEAN PATENT SPECIFICATION

(45) Date of publication and mention
of the grant of the patent:
**10.04.2024 Bulletin 2024/15**

(21) Application number: **20744359.9**

(22) Date of filing: **15.01.2020**

(51) International Patent Classification (IPC):
**G06T 7/11** (2017.01)　　　**G06T 7/00** (2017.01)

(52) Cooperative Patent Classification (CPC):
**G06T 7/11; G06F 18/25; G06N 3/04; G06N 3/08;**
**G06T 7/0012; G06V 10/26; G06V 10/454;**
**G06V 10/764; G06V 10/80; G06V 10/82;**
G06T 2207/10088; G06T 2207/20081;
G06T 2207/20084; G06T 2207/30016;
G06T 2207/30096;　　　　　　　　(Cont.)

(86) International application number:
**PCT/CN2020/072114**

(87) International publication number:
**WO 2020/151536 (30.07.2020 Gazette 2020/31)**

(54) **BRAIN IMAGE SEGMENTATION METHOD, APPARATUS, NETWORK DEVICE AND STORAGE MEDIUM**

VERFAHREN ZUR SEGMENTIERUNG VON GEHIRNBILDERN, VORRICHTUNG,
NETZWERKGERÄT UND SPEICHERMEDIUM

PROCÉDÉ DE SEGMENTATION D'IMAGES CÉRÉBRALES, APPAREIL, DISPOSITIF DE RÉSEAU
ET SUPPORT DE STOCKAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **25.01.2019 CN 201910070881**

(43) Date of publication of application:
**01.12.2021 Bulletin 2021/48**

(73) Proprietor: **Tencent Technology (Shenzhen)**
**Company Limited**
**Shenzhen, Guangdong, 518057 (CN)**

(72) Inventors:
• **GUO, Heng**
 **Shenzhen, Guangdong 518057 (CN)**
• **LI, Yuexiang**
 **Shenzhen, Guangdong 518057 (CN)**
• **ZHENG, Yefeng**
 **Shenzhen, Guangdong 518057 (CN)**

(74) Representative: **Eisenführ Speiser**
**Patentanwälte Rechtsanwälte PartGmbB**
**Postfach 31 02 60**
**80102 München (DE)**

(56) References cited:
 **CN-A- 105 701 799　　CN-A- 108 257 134**
 **CN-A- 108 876 794　　CN-A- 108 986 106**
 **CN-A- 109 872 328　　US-A1- 2016 328 855**

• **VIDYARATNE L ET AL: "Deep learning and**
 **texture-based semantic label fusion for brain**
 **tumor segmentation", PROGRESS IN**
 **BIOMEDICAL OPTICS AND IMAGING, SPIE -**
 **INTERNATIONAL SOCIETY FOR OPTICAL**
 **ENGINEERING, BELLINGHAM, WA, US, vol.**
 **10575, 27 February 2018 (2018-02-27), pages**
 **105750D-105750D, XP060101142, ISSN:**
 **1605-7422, DOI: 10.1117/12.2292930 ISBN:**
 **978-1-5106-0027-0**

**(Cont. next page)**

- **PEREIRA SERGIO ET AL: "Brain Tumor Segmentation Using Convolutional Neural Networks in MRI Images", IEEE TRANSACTIONS ON MEDICAL IMAGING, IEEE, USA, vol. 35, no. 5, 1 May 2016 (2016-05-01), pages 1240-1251, XP011607955, ISSN: 0278-0062, DOI: 10.1109/TMI.2016.2538465 [retrieved on 2016-04-29]**
- **LI YUEXIANG ET AL: "Deep Learning Based Multimodal Brain Tumor Diagnosis", 17 February 2018 (2018-02-17), ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 149 - 158, XP047464672, ISBN: 978-3-540-74549-5 [retrieved on 2018-02-17] * secttion 2 * * figure 3 ***

(52) Cooperative Patent Classification (CPC): (Cont.)
G06V 2201/03; Y02A 90/10

**Description**

RELATED APPLICATION

This application claims priority to Chinese Patent Application No. 201910070881.7, entitled "METHOD AND APPARATUS FOR SEGMENTING BRAIN IMAGE, AND STORAGE MEDIUM" and filed with the China National Intellectual Property Administration, on January 25, 2019.

FIELD OF THE TECHNOLOGY

The present disclosure relates to the field of communication technologies, and specifically, to a method and an apparatus for segmenting a brain image, a network device, and a storage medium.

BACKGROUND OF THE DISCLOSURE

Artificial Intelligence (AI) refers to a theory, a method, technology, or an application system, which simulates, extends, and expands human intelligence, perceives an environment, acquires knowledge, and utilizes knowledge, to obtain an optimal result via a digital computer or a machine controlled by a digital computer. In other words, the AI is a comprehensive technology of computer science, which attempts to understand essence of intelligence and produce a novel intelligent machine that can react in a manner similar to human intelligence. The AI aims at studying design principles and implementation methods of various intelligent machines, so as to render machines capable of perceiving, reasoning, and making decisions.

AI technology is a comprehensive discipline related to a wide range of fields, and includes techniques at levels of both hardware and software level. Basic AI technology generally includes techniques such as sensors, dedicated AI chips, cloud computing, distributed storage, big data processing, operation/interaction systems, and mechatronics. AI software technology mainly includes several major directions such as computer vision, speech processing, natural language processing, and machine learning (ML) or deep learning.

The ML is multi-field interdiscipline, and relates to multiple disciplines such as the probability theory, statistics, the approximation theory, convex analysis, and the theory of algorithm complexity. The ML specializes in studying how a computer simulates or implements human learning behaviors to obtain new knowledge or new skills, and how a computer reorganizes a structure of existing knowledge to keep improving its performances. The ML is a core of AI, is a fundamental way to make a computer intelligent, and is applied to various fields of AI. Generally, the ML and deep learning include techniques such as artificial neural networks, belief networks, reinforcement learning, transfer learning, inductive learning, and learning from instructions.

Brain diseases are main diseases threatening health of human bodies, and quantitative analysis on a structure of brain tissues is of great significance in clinical medicine. Brain degradation diseases such as Alzheimer's disease, Parkinson's disease, multiple sclerosis, and schizophrenia are taken as an example. These neurologic diseases results in an abnormal volume or an abnormal regional distribution of soft tissues and cerebrospinal fluid in a human brain. Thus a doctor may perform accurate measurement on volumes of the tissues to evaluate a risk and a disease level of a patient. Accurate segmentation on a brain image serves as a premise of accurate measurement, and therefore is particularly important.

Generally, conventional segmentation on brain images is generally implemented manually. With development of computer vision technology and the AI technology, proposed is a technique of segmenting an image of magnetic resonance imaging (MRI) of a brain based on deep learning. As a specific example, after multiple modal images of brain tissues are fused, skull stripping (that is, distinguishing the brain tissues from non-brain tissues) is performed through software. Then, tissue regions are identified and segmented based on a result of the stripping. Such solution achieves higher efficiency and segmentation accuracy when compared with the conventional ones. In the solution, information from some modes is discarded during fusion, resulting in a limited capability of feature expression and affecting the segmentation accuracy.

L. Vidyaratne et al., "Deep Learning and Texture-Based Semantic Label Fusion for Brain Tumor Segmentation", Progress in Biomedical Optics and Imaging, SPIE-International Society for Optical Engineering, Bellingham, WA, US, Vol. 10575, 27 February 2018, proposes combining texture based hand-crafted, and deep learning based methods to obtain brain tumor segmentation from MRI.

SUMMARY

Methods for segmenting a brain image, a network device, and a storage medium, are provided according to embodiments of the present disclosure, which can improve a capability of feature expression and segmentation accuracy.

A method for segmenting a brain image is provided according to an embodiment of the present disclosure. The method includes:

obtaining a group of to-be-segmented images, where the group includes multiple modal images of a brain;

performing skull stripping according to the multiple modal images, to obtain a mask for stripping a skull;

extracting features from the multiple modal images separately, and fusing the extracted features to obtain a fusion feature;

segmenting encephalic tissues according to the fusion feature, to obtain an initial segmentation result; and

fusing the mask and the initial segmentation result, to obtain a segmentation result corresponding to the group of to-be-segmented images, wherein:

the plurality of modal images comprises a first modal image for tissue region segmentation, a second modal image for encephalic region identification, and a third modal image for protein lesion region identification;

performing the skull stripping according to the plurality of modal images to obtain the mask for stripping the skull comprises: performing the skull stripping according to the first modal image and the second modal image, to obtain the mask for stripping the skull; and

extracting the features from the plurality of modal images separately comprises: extracting the features from the first modal image, the second modal image, and the third modal image separately; and

wherein extracting the features from the first modal image, the second modal image, and the third modal image separately comprises:

fusing the first modal image and the second modal image, to obtain a fusion image; and

extracting the features from the fusion image and the third modal image separately through a trained multi-branch fully convolutional network.

Correspondingly, a method for segmenting a brain image is provided according to an embodiment of the present invention. The method comprises:

obtaining a group of to-be-segmented images, wherein the group of to-be-segmented images comprises a plurality of modal images of a brain;

performing skull stripping according to the plurality of modal images to obtain a mask for stripping a skull;

extracting features from the plurality of modal images separately, and fusing the extracted features to obtain a fusion feature;

segmenting encephalic tissues according to the fusion feature to obtain an initial segmentation result; and

fusing the mask and the initial segmentation result to obtain a segmentation result corresponding to the group of to-be-segmented images;

wherein not all modal images in the plurality of the modal images are utilized during the skull stripping.

A storage medium is further provided according to an embodiment of the present disclosure. The storage medium stores multiple instructions, and the instructions are capable to be loaded by a processor, to perform the foregoing method for segmenting the brain image.

Correspondingly, a network device is further provided according to an embodiment of the present disclosure. The network device includes a processor and a memory, and the memory is configured to store multiple instructions. The instructions when executed by the processor configured the processor to perform the foregoing method for segmenting the brain image.

In embodiments of the present disclosure, the group of to-be-segmented images is obtained. Afterwards, in one aspect, the skull stripping may be performed according to multiple modal images in the group of to-be-segmented images, to obtain the mask for stripping the skull. In another aspect, the features may be extracted from the multiple modal images separately and fused, then the encephalic tissues are segmented according to a fusion feature obtained through the fusing, and afterwards the initial segmentation result obtained through segmentation and the previously obtained mask are fused to obtain a final segmentation result. In this solution, the features of all modal images are first extracted and then fused during initial segmentation. Therefore, information contained in each modality can be retained as much as possible, thereby improving an expression capability of the extracted features. In addition, the mask obtained through skull stripping may be used to remove a phenomenon of false positives in the result obtained through the initial segmentation. Therefore, the capability of feature expression and the segmentation accuracy are improved in comparison with a solution in which the modal images are directly fused and subject to skull stripping and then segmented based on a result of the stripping.

BRIEF DESCRIPTION OF THE DRAWINGS

For clearer illustration of the technical solutions according to embodiments of the present disclosure or conventional techniques, hereinafter briefly described are the drawings to be applied in embodiments of the present disclosure or conventional techniques. Apparently, the drawings in the following descriptions are only some embodiments of the present disclosure, and other drawings may be obtained by those skilled in the art based on the provided drawings without creative efforts.

Figure 1 is a schematic diagram of a scenario of a method for segmenting a brain image according to an embodiment of the present disclosure;

Figure 2 is a flowchart of a method for segmenting a brain image according to an embodiment of the present disclosure;

Figure 3 is a structural diagram of a three-dimensional fully convolutional network according to an embodiment of the present disclosure;

Figure 4 is a structural diagram of multi-branch fully convolutional network according to an embodiment of the present disclosure;

Figure 5 is a structural diagram of a model for segmenting a brain image according to an embodiment of the present disclosure;

Figure 6 is a structural diagram of a down-sampling module according to an embodiment of the present disclosure;

Figure 7 is a schematic diagram of multiple modal images according to an embodiment of the present disclosure;

Figure 8 is a schematic structural diagram of a residual block according to an embodiment of the present disclosure;

Figure 9 is another structural diagram of a model for segmenting a brain image according to an embodiment of the present disclosure;

Figure 10 is another flowchart of a method for segmenting a brain image according to an embodiment of the present disclosure;

Figure 11 is a diagram of comparison between a group of to-be-segmented images and a segmentation result according to an embodiment of the present disclosure;

Figure 12 is a schematic structural diagram of an apparatus for segmenting a brain image according to an embodiment of the present disclosure;

Figure 13 is another schematic structural diagram of an apparatus for segmenting a brain image according to an embodiment of the present disclosure; and

Figure 14 is a schematic structural diagram of a network device according to an embodiment of the present disclosure.

DESCRIPTION OF EMBODIMENTS

The technical solutions in embodiments of the present disclosure are clearly and completely described in the following with reference to the accompanying drawings in the embodiments of the present disclosure. Apparently, the described embodiments are merely some rather than all of the embodiments of the present disclosure.

A method and an apparatus for segmenting a brain image, and a storage medium are provided according to embodiments of the present disclosure. The apparatus for segmenting the brain image may be integrated into a network device. The network device may be a server device, a terminal, or another device.

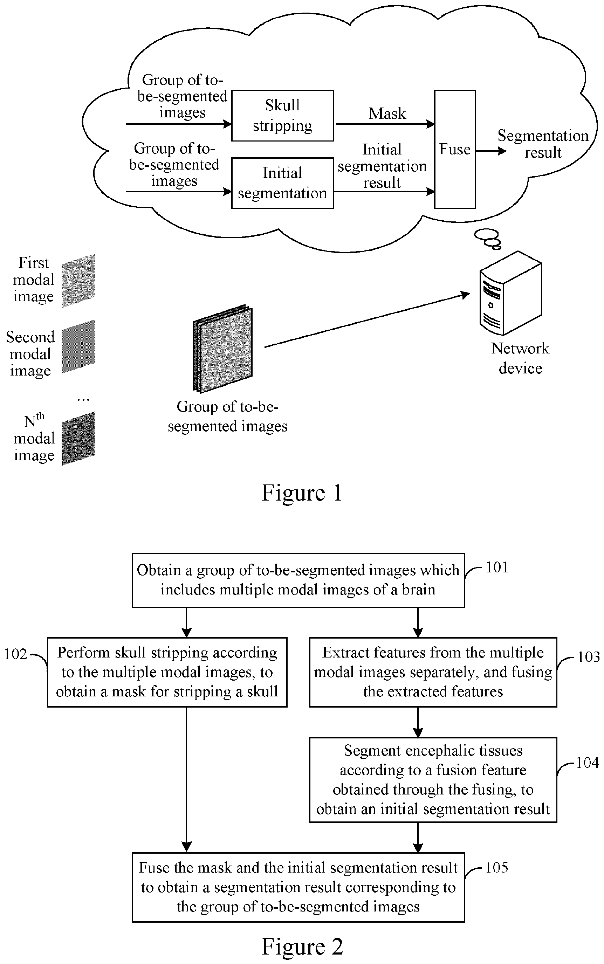

As a specific example, reference is made to Figure 1, where an apparatus for segmenting a brain image is integrated into a network device. First, multiple modal images of a brain of a person may be acquired via medical image collecting devices, such as a computed tomography (CT) or a magnetic resonance imaging device. Then, the acquired multiple modal images (such as a first modal image, a second modal image,..., and an $N^{th}$ modal image) are added into a same set, to obtain a group of to-be-segmented images, and the image group is provided to the network device. After receiving the image group, in one aspect, the network device may perform skull stripping according to the multiple modal images, to obtain a mask for stripping a skull. In another aspect, the network device may segment encephalic tissues according to the multiple modal images, to obtain an initial segmentation result. Then, the network device fuses the mask and the initial segmentation result, to obtain a segmentation result corresponding to the group of to-be-segmented images.

During initial segmentation, this solution does not fuse multiple modal images independently from feature extraction, in order to prevent a loss of image information from affecting a capability of feature expression. Instead, this solution fuses features after extracting the features from the multiple modal images, and then segments encephalic tissues according to a fusion feature obtained through the fusing to obtain an initial segmentation result. This solution can improve the capability of feature expression, and fusion of the mask and the initial segmentation result can eliminate a phenomenon of false positives in the initial segmentation result. Hence, segmentation accuracy is greatly improved.

Hereinafter detailed description is provided. A sequence of describe following embodiments is not intended to limit an order of the embodiments.

In this embodiment, description is made from a side of an apparatus for segmenting a brain image. In a specific embodiment, the apparatus is integrated into a network device such as a terminal or a server device.

A method for segmenting a brain image is provided. The method is performed by the apparatus for segmenting the brain image. The method includes: obtaining a group of to-be-segmented images, where the group includes multiple modal images of a brain; performing skull stripping according to the multiple modal images, to obtain a mask for stripping a skull; extracting features separately from the multiple modal images, and fusing the extracted features; segmenting encephalic tissues according to a fusion feature obtained through the fusing, to obtain an initial segmentation result; and fusing the mask and the initial segmentation result, to obtain a segmentation result corresponding to the group of to-be-segmented images. As described above, the apparatus for segmenting the brain image is integrated into the network device, such that the method may be performed by the network device.

As shown in Figure 2, a specific process of the apparatus for segmenting a brain image may include steps 101 to 105.

In step 101, a group of to-be-segmented images is obtained.

As a specific embodiment, the group of to-be-segmented images sent by a medical image collecting device, such as a CT or a magnetic resonance imaging device, may be received. Each group of to-be-segmented images may be acquired through the medical image collecting device performing collection on a brain of a same object, such as a same person.

The group of to-be-segmented images is a set of images on which image segmentation needs to be performed. In a specific embodiment, the group may include multiple modal images of the brain, for example, a first modal image (such as a T1 image in magnetic resonance modal images) for tissue region segmentation, a second modal image (such as a T1 inversion recovery (T1_IR) image in magnetic resonance modal images) for encephalic region identification, and a third modal image (such as a T2 image in magnetic resonance modal images) for protein lesion region identification.

The T1 image is a data modality in magnetic resonance imaging, and is obtained by merely capturing longitudinal movement of hydrogen protons during magnetic resonance imaging. The T1 image is mainly used for observing anatomical details. The T1_IR image is a fat suppression technique in magnetic resonance imaging, where a signal due to an adipose tissue is suppressed in strength to emphasize other tissues. The T1_IR image is very useful for observing adrenal glands, bone marrow, and fatty tumours. In embodiments of the present disclosure, the T2 image mainly refers to an image of fluid attenuation inversion recovery (FLAIR), which is a technique for suppressing a signal of water in strength during magnetic resonance imaging. The T2 image is very useful for presenting cerebral oedema, and periventricular or cortical lesions generated due to multiple sclerosis.

In step 102, skull stripping is performed according to the multiple modal images, to obtain a mask for stripping a skull.

Skull stripping refers to distinguishing a skull from a brain in magnetic resonance imaging, that is, identifying an encephalic region in an image and separating the encephalic region from a background region (that is, a region other than the encephalic region) (that is, separating a brain tissue from a non-brain tissue). The mask is an image for retaining the encephalic region while masking voxels in the background region.

All or some of the modal images may be used during the skull stripping. It is taken as an example that the multiple modal images include a first modal image, a second modal image, and a third modal image. In such case, the skull stripping may be performed according to the first modal image and the second modal image, to obtain the mask for stripping the skull. In a specific embodiment, the skull stripping may include following steps (1) to (4).

In step (1), the first modal image and the second modal image are fused to obtain a fusion image.

The fusion may be implemented in various specific manners. For example, the first modal image and the second modal image may be fused through adding features or splicing channels, to obtain a fusion image.

In step (2), categories of voxels in the fusion image are predicted through a trained three-dimensional (3D) fully convolutional network.

The trained 3D fully convolutional network is a branch of a trained model for segmenting a brain image according to embodiments of the present disclosure. The trained 3D fully convolutional network may include two parts. One part is a 3D residual network (also known as an encoder) for encoding, which is configured to extract a feature from the fusion image. The other part is a classification network (also known as a decoder), which is configure to predict the categories of the voxels.

The trained 3D fully convolutional network may include a 3D residual network and a classification network. In such case, the step (2) may include following steps A and B.

In step A, a feature is extracted from the fusion image through the 3D residual network, to obtain feature information.

A specific structure of the 3D residual network may be determined according to a requirement of a practical application. For example, the 3D residual network may include a convolutional layer, multiple of residual blocks (Res-Block), multiple down-sampling modules, and the like. The residual blocks of different sizes (that is, sizes of inputted/outputted images) may implement feature extraction of different scales. The down-sampling module may generate a thumbnail of a corresponding image, so that an outputted image can meet a requirement on sizes.

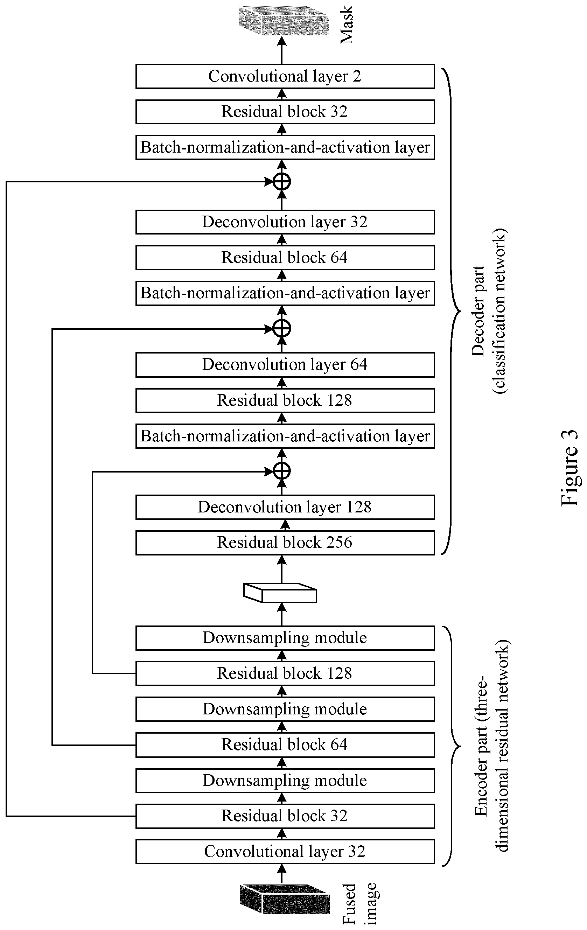

As an example, referring is made to Figure 3. The 3D residual network includes a convolutional layer (i.e. convolutional layer 32) with a size of 32 (that is, a size of an inputted/outputted image) and a convolution kernel of $3\times3\times3$, a residual block (i.e. residual block 32) with a size of 32, a residual block (i.e. residual block 64) with a size of 64, a residual block (i.e. residual block 128) with a size of 128, and multiple down-sampling modules. In such case, a process of extracting the feature from the fusion image may be as follows.

Convolution is performed on the fusion image through the convolutional layer, and then a result of the convolution serves as an input of a residual block, i.e. the residual block 32, for feature extraction. Afterwards, a feature map outputted by the residual block 32 is down-sampled through a down-sampling module, and then serves as an input of another residual block, i.e. the residual block 64, for feature extraction of another scale. Similarly, a feature map outputted by the residual block 64 is down-sampled through another down-sampling module, and then serves as an input of still another residual block, i.e. the residual block 128. After processing of the residual block 128, a feature map outputted by the residual block 128 is down-sampled through still another down-sampling module, and so forth. Multiple feature maps of different scales (or different levels) and a final output of the 3D residual network can be obtained after similar feature extraction through multiple residual blocks of different sizes and similar down-sampling. In embodiments of the present disclosure, the feature information refers to both the multiple feature maps and the final output of the 3D residual network.

In step B, a category of each voxel in the fusion image is predicted through the classification network according to the obtained feature information.

A specific structure of the classification network may also be determined according to a requirement of a practical application. For example, the classification network may include multiple residual blocks and multiple deconvolution (Deconv) layers. The classification network may further include a convolutional layer, multiple batch normalization (BN) layers and an activation function (ReLU) layer (where the BN layers and the ReLU layers may alternatively be implemented as a same layer).

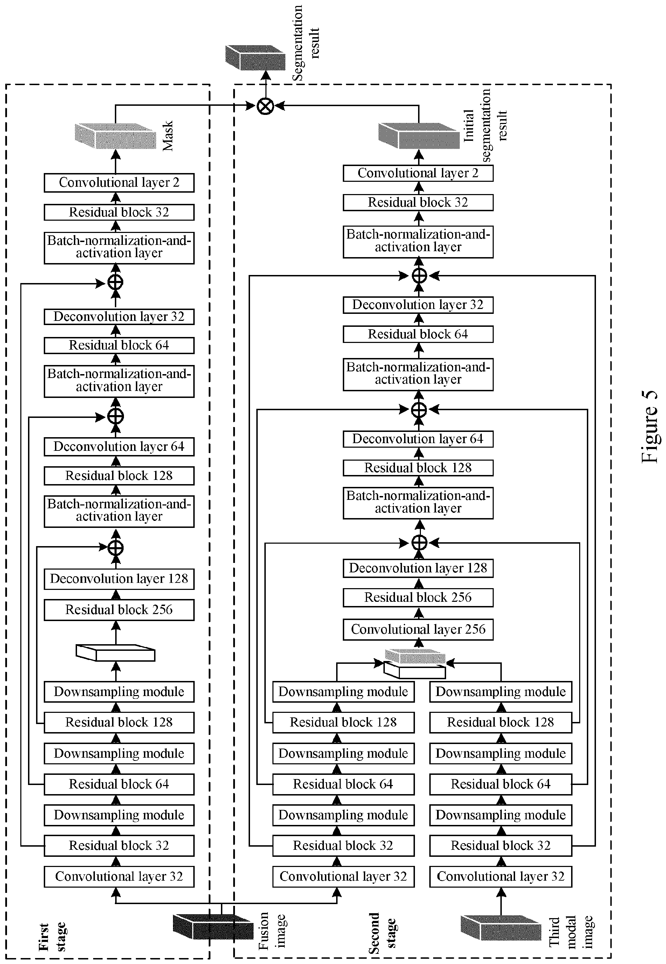

As an example, reference is made to Figure 3 and Figure 5. The classification network includes: a residual block "residual block 256" with a size of 256, a deconvolution layer (i.e. deconvolution layer 128) with a size of 128, a residual block (residual block 128) with a size of 128, a deconvolution layer with a size of 64 (i.e. deconvolution layer 64), a residual block with a size of 64 (residual block 64), a deconvolution layer with a size of 32 (i.e. deconvolution layer 32), a residual block (residual block 32) with a size of 32, a convolutional layer (i.e. convolutional layer 2) with a size of 2 and a convolution kernel of $1\times1\times1$, and a layer of multiple BNs and an activation function (that is, batch-normalization-and-activation layer). In such case, a process of predicting categories of voxels may be as follows.

The final output of the 3D residual network is processed through a residual block, i.e. the residual block 256, and then a result of the processing is imported to a deconvolution layer, i.e. the deconvolution layer 128, for deconvolution. Afterwards, a result of the deconvolution and the feature map obtained by the residual block 128 in the residual network are fused. A result of the fusing is subject to batch normalization and introduction of a nonlinear factor (which is introduced through an activation function), and then serves as an input of another residual block, i.e. the residual block 128, of the classification network for processing. Similarly, a deconvolution layer, i.e. the deconvolution layer 64, performs deconvolution on an output of the residual block 128, a result of the deconvolution and a feature map obtained by the residual block 64 of the residual network may be fused. Similarly, a batch-normalization-and-activation layer performs batch normalization and introduction of a nonlinear factor on a result of such fusing, and an output of the batch-normalization-and-activation layer may serves an input of still another residual block of the classification network, i.e. the residual block 64. Such output is processed through the residual block 64 and a deconvolution layer, i.e. the deconvolution layer 32, and then a result of deconvolution and a feature map obtained by the residual block 32 of the residual network are fused. Finally, a result of such fusing is processed by a batch-normalization-and-activation layer, the residual block 32, and a convolutional layer (i.e. the convolutional layer 2), and then a category of each voxel in the fusion image can be predicted.

The trained 3D fully convolutional network may be trained by using multiple first groups of sample images. In a specific embodiment, the training may be performed by another device, and then the trained 3D fully convolutional network is provided to the apparatus for segmenting the brain image. Alternatively, the training may be performed by the apparatus itself. That is, the method for segmenting the brain image may further include following steps before the step (2).

Multiple first groups of sample images are acquired. The first group of sample images includes a first modal image sample for tissue region segmentation, a second modal image sample for encephalic region identification, and other information. The first modal image sample and the second modal image sample are fused to obtain a fusion image sample. Categories of voxels in the fusion image sample are predicted through a preset 3D fully convolutional network, to obtain predicted values. Actual values for the categories of the voxels in the fusion image sample are obtained. The 3D fully convolutional network is converged according to the predicted values and the actual values through a loss function of cross entropy, to obtain the trained 3D fully convolutional network.

As a specific example, multiple 3D medical images related to brains may be acquired as an original data set. Then, the images in the original data set is subject to pre-processing such as duplicate deletion, cropping, rotating, and/or flipping, to obtain images meeting a standard for inputting into the preset 3D fully convolutional network. Afterwards, categories of voxels in the pre-processed images are annotated, and images belonging to a same brain are added into a same image set, so that each brain has a corresponding image set. In embodiments of the present disclosure, the first group of sample images refers to such image set.

The first modal image sample and the second modal image sample may be fused in various manners. For example, the first modal image and the second modal image may be fused through adding features or splicing channels. In addition, a manner of predicting the categories of the voxels in the fusion image through the preset 3D fully convolutional network may be similar manner to that in processing the first modal image and the second modal image. Details refer to the foregoing embodiments, and are not described again herein.

(3) Voxels not belonging to an encephalic region are selected according to the predicted categories, to obtain a set of background voxels.

(4) The set of background voxels are masked on the fusion image, to obtain the mask for stripping the skull.

As a specific example, values of voxels in the encephalic region may be set as 1, and values of voxels in a background region may be set as 0, to obtain the mask for stripping the skull.

Accordingly, image values of the initial segmentation result can be retained in the encephalic region and zeroed in the background region, by fusing (for example, multiplying) the mask and the initial segmentation result in a subsequent step. Namely, a phenomenon of false positives can be eliminated in the initial segmentation result.

In step 103, features are extracted from the multiple modal images separately, and the extracted features are fused.

It is further taken as an example that the multiple modal images include a first modal image, a second modal image, and a third modal image. In such case, the features may be extracted from the first modal image, the second modal image, and the third modal image separately, and the extracted features are fused. As a specific embodiment, the process may be as follows.

The first modal image and the second modal image are fused to obtain a fusion image. The features are extracted separately from the fusion image and the third modal image, through a trained multi-branch fully convolutional network. The extracted features are fused.

In a case that the first modal image and the second modal image have already been fused and stored in the step 102, the stored fusion image may be directly read, and it is not necessary to fuse the first modal image and the second modal image again. As shown in Figure 5, the fusion image may be separately provided at a first stage and a second stage for usage, after the first modal image and the second modal image are fused.

The trained multi-branch fully convolutional network is another branch of the trained model for segmenting the brain image according to embodiments of the present disclosure. A structure of the trained multi-branch fully convolutional network may be configured according to a requirement of a practical application. For example, the trained multi-branch fully convolutional network may include an upper-branch 3D residual structure, a lower-branch 3D residual structure, and a classification network module. A part including the upper-branch 3D residual structure and the lower-branch 3D residual structure may be called an encoder. Such part is for encoding, and is configured to extract a feature from an image. The classification network module is equivalent to a decoder. The classification network module is for decoding, and configured to predict categories of voxels and perform segmentation.

The trained multi-branch fully convolutional network may include the upper-branch 3D residual structure, the lower-branch 3D residual structure, and the classification network module. In such case, the steps that the features are extracted separately from the fusion image and the third modal image through a trained multi-branch fully convolutional network and the extracted features are fused, may include the following steps (1) to (3).

In step (1), an upper-branch feature is extracted from the fusion image through the upper-branch 3D residual structure.

The upper-branch 3D residual structure may include an upper-branch convolution module, a first upper-branch residual block, a first upper-branch down-sampling module, a second upper-branch residual block, a second upper-branch down-sampling module, a third upper-branch residual block, and a third upper-branch down-sampling module. In such case, the step (1) may include following steps A to D.

In step A, convolution is performed on the fusion image through the upper-branch convolution module.

In step B, an output of the upper-branch convolution module is encoded through the first upper-branch residual block, and a result of the encoding is down-sampled through the first upper-branch down-sampling module.

In step C, an output of the first upper-branch down-sampling module is encoded through the second upper-branch residual block, and a result of the encoding is down-sampled through the second upper-branch down-sampling module.

In step D, an output of the second upper-branch down-sampling module is encoded through the third upper-branch residual block, and a result of the encoding is down-sampled through the third upper-branch down-sampling module, to obtain the upper-branch feature.

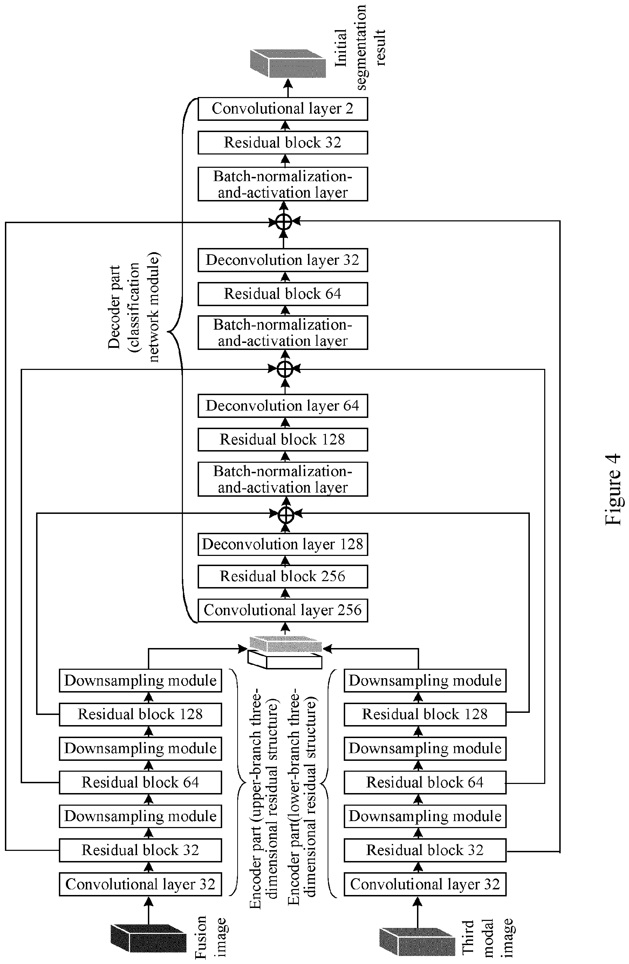

Network parameters of the upper-branch convolution module, the first upper-branch residual block, the second upper-branch residual block, and the third upper-branch residual block may be configured according to a requirement of a practical application. As an example, reference is made to Figure 4 and Figure 5. The upper-branch convolution module may be set as a convolutional layer with a size of 32 and a convolution kernel size of $3 \times 3 \times 3$ (i.e. convolutional layer 32 of an upper branch in Figure 4). The first upper-branch residual block may be set as a residual block with a size of 32 (i.e. residual block 32 of the upper branch in Figure 4). The second upper-branch residual block may be set as a residual block with a size of 64 (i.e. residual block 64 of the upper branch in Figure 4). The third upper-branch residual block may be set to a residual block with a size of 128 (i.e. residual block 128 of the upper branch in Figure 4). Other parts can be obtained by analogy.

In step (2), a lower-branch feature is extracted from the third modal image through the lower-branch 3D residual structure.

The lower-branch 3D residual structure includes a lower-branch convolution module, a first lower-branch residual block, a first lower-branch down-sampling module, a second lower-branch residual block, a second lower-branch down-sampling module, a third lower-branch residual block, and a third lower-branch down-sampling module. In such case, the step (2) may include following steps A to D.

In step A, convolution is performed on the third modal image through the lower-branch convolution module.

In step B, an output of the lower-branch convolution module is encoded through the first lower-branch residual block, and a result of the encoding is down-sampled through the first lower-branch down-sampling module.

In step C, an output of the first lower-branch down-sampling module is encoded through the second lower-branch residual block, and a result of the encoding is down-sampled through the second lower-branch down-sampling module.

In step D, an output of the second lower-branch down-sampling module is encoded through the third lower-branch residual block, and a result of the encoding is down-sampled through the third lower-branch down-sampling module, to obtain the lower-branch feature.

Network parameters of the lower-branch convolution module, the first lower-branch residual block, the second lower-branch residual block, and the third lower-branch residual block may be configured according to a requirement of a practical application. As an example, reference is made to Figure 4 and Figure 5. The lower-branch convolution module may be set as a convolutional layer with a size of 32 and a convolution kernel size of $3 \times 3 \times 3$ (i.e. convolutional layer 32 of a lower branch in Figure 4). The first lower-branch residual block may be set as a residual block with a size of 32 (i.e. residual block 32 of the lower branch in Figure 4). The second lower-branch residual block may be set as a residual block with a size of 64 (i.e. residual block 64 of the lower branch in Figure 4). The third lower-branch residual block may be set as a residual block with a size of 128 (i.e. residual block 128 of the lower branch in Figure 4). Other parts can be obtained by analogy.

In addition, when extracting the upper-branch feature and the lower-branch feature, a result of the forgoing encoding may be down-sampled in various manners. For example, the result of encoding may be down-sampled through a maximum pooling layer. Alternative manners may be adopted. For example, convolution may be performed on the result separately through two parallel convolutional layers that are identical in a stepsize but different in convolution kernels, and then a result of the convolution is batch-normalized through a batch normalization layer, to achieve the down-sampling.

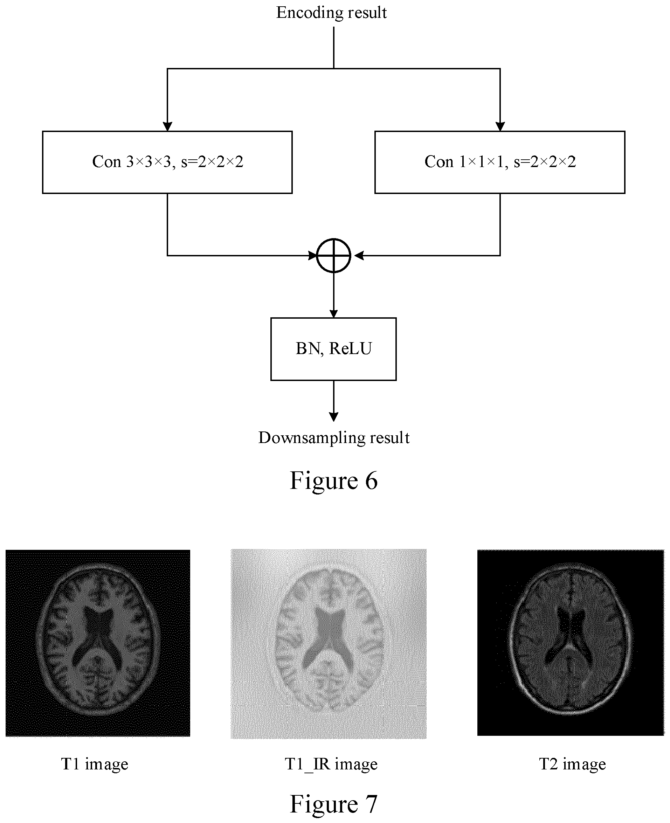

In a specific embodiment, network parameters of the two parallel convolutional layers that are "identical in a stepsize but different in convolution kernels" may be configured according to a requirement of a practical application. For example, referring to Figure 6, the stepsize of the two convolutional layers may be set as 2 (that is, s=2×2×2), and the convolution kernels may be set as 3×3×3 and 1×1×1, respectively (see "Con 3×3×3, s=2×2×2" and "Con 1×1×1, s=2×2×2" in Figure 6). A structure performing the down-sampling may further include an activation layer, so that non-linearity is introduced into a result of the batch normalization, improving the capability of feature expression. The batch normalization layer and the activation layer are collectively called "BN, ReLU" in Figure 6, to facilitate description.

The down-sampling module in step 102 may be implemented through a maximum pooling layer, and may alternatively be implemented through a down-sampling structure as shown in Figure 6. Details are not described again herein.

(3) The upper-branch feature and the lower-branch feature are fused through the classification network module.

For example, the fusion may be performed by adding or multiplying voxels in the upper-branch feature and the lower-branch feature.

In step 104, encephalic tissues are segmented according to a fusion feature obtained through the fusing, to obtain an initial segmentation result. As a specific example, the step 104 may include a following step.

The fusion feature is classified through a classification network module, and the encephalic tissues are segmented based on a result of the classifying to obtain the initial segmentation result.

For example, the fusion features belonging to a category of "white matter lesion" may be added into a same set according to the classifying result. Segmentation is performed based on such set, so as to acquire a corresponding region of white matter lesion. Other cases can be obtained by analogy.

As an example, reference is made to Figure 4 and Figure 5. The classification network module includes: a convolutional layer with a size of 256 and a convolution kernel of 1×1×1 (i.e. convolutional layer 256), a residual block with a size of 256 (residual block 256), a deconvolution layer with a size of 128 (i.e. a deconvolution layer 128), a residual block with a size of 128 (residual block 128), a deconvolution layer with a size of 64 (i.e. deconvolution layer 64), a residual block with a size of 64 (residual block 64), a deconvolution layer with a size of 32 (i.e. a deconvolution layer 32), a residual block with a size of 32 (residual block 32), a convolutional layer with a size of 10 and a convolution kernel of 1×1×1 (i.e. a convolutional layer 10), and a layer of multiple BNs and an activation function (i.e. batch-normalization-and-activation layer). In such case, a process of classifying the fusion feature may be as follows.

Convolution is performed on the fusion feature through the convolutional layer 256, an output of the convolutional layer 256 is processed through the residual block 256, and then a result of the processing is imported into a deconvolution layer, i.e. the deconvolution layer 128, for deconvolution. Afterwards, a result of the deconvolution and a feature map obtained by the residual block 128 in the residual network are fused. A result of the fusing is subject to batch normalization and introduction of a nonlinear factor, and then serves as an input of another residual block, i.e. the residual block 128, of the classification network for processing. Similarly, an output of the residual block 128 is subject to deconvolution through a deconvolution layer, i.e. the deconvolution layer 64, and then a result of the deconvolution and a feature map obtained by the residual block 64 of the residual network may be fused. Similarly, a result of the fusing is subject to batch normalization and introduction of a nonlinear factor through a batch-normalization-and-activation layer. Afterwards, an output of the batch-normalization-and-activation layer may serves as an input of still another residual block, i.e. the residual block 64, of the classification network, and is processed through the residual block 64 and a deconvolution layer, i.e. the deconvolution layer 32. Then, a result of the deconvolution and a feature map obtained by the residual block 32 of the residual network are fused. Finally, a result of the fusing is processed through a batch-normalization-and-activation layer, the residual block 32, and a convolutional layer (i.e. the convolutional layer 10). Thereby, a category of the fusion feature can be obtained.

The trained multi-branch fully convolutional network may be trained by using multiple second groups of sample images. In a specific embodiment, the training may provide by another device, and then the trained multi-branch fully convolutional network is provided to the apparatus for segmenting the brain image. Alternatively, the training may be performed by the apparatus itself. That is, the method for segmenting the brain image may further include following steps, before the step that the feature is extracted from the fusion image and the third modal image separately through the trained multi-branch fully convolutional network.

Multiple second groups of sample images are acquired. The second group of sample images includes a first modal image sample for tissue region segmentation, a second modal image sample for encephalic region identification, and a third modal image sample for protein lesion region identification. The first modal image sample and the second modal image sample are fused to obtain a fusion image sample. Features are extracted from the fusion image sample and the third modal image sample separately, through a preset multi-branch fully convolutional network. The features are fused, and a fusion feature obtained after the fusing is classified to obtain a predicted value for a category. An actual value for the category of the fusion feature is obtained. The multi-branch fully convolutional network is converged according to the predicted value and the actual value of the category through a loss function of multi-class categorization, to obtain the trained multi-branch fully convolutional network.

As a specific embodiment, multiple 3D medical images related to brains may be acquired as an original data set. Then, the images in the original data set is subject to pre-processing such as duplicate deletion, cropping, rotating, and/or flipping, to obtain images meeting a standard for inputting into the preset multi-branch fully convolutional network. Afterwards, categories of voxels in the pre-processed images are annotated, and images belonging to a same brain are added into a same image set, so that each brain has a corresponding image set. In embodiments of the present disclosure, the second group of sample images refers to such image set.

In a case that the first modal image and the second modal image have already been fused and stored in the step 102, the stored fusion image may be directly read, and it is not necessary to fuse the first modal image sample and the second modal image sample again. That is, as shown in Figure 5, the fusion image obtained after the fusing may be separately provided at a first stage and a second stage for usage, after the first modal image sample and the second modal image sample are fused.

An order of executing the steps 102 and 103 may not be limited.

In step 105, the mask and the initial segmentation result are fused to obtain a segmentation result corresponding to the group of to-be-segmented images.

As a specific embodiment, voxels of the mask and voxels of the initial segmentation result may be multiplied (element-wise multiplication), to obtain the segmentation result corresponding to the group of to-be-segmented images. In a specific embodiment, the step 105 may include following steps.

A value of each voxel on the mask and a value of each voxel in the initial segmentation result may be separately obtained. A first matrix is established according to the value of each voxel on the mask, and a second matrix is established according to the value of each voxel in the initial segmentation result. A dot product operation between elements in the first matrix and elements in the second matrix is performed, to obtain the segmentation result corresponding to the group of to-be-segmented images.

In embodiments of the present disclosure, the group of to-be-segmented images is obtained. Afterwards, in one aspect, the skull stripping may be performed according to multiple modal images in the group of to-be-segmented images, to obtain the mask for stripping the skull. In another aspect, the features may be extracted from the multiple modal images separately and fused, then the encephalic tissues are segmented according to a fusion feature obtained through the fusing, and afterwards the initial segmentation result obtained through segmentation and the previously obtained mask are fused to obtain a final segmentation result. In this solution, the features of all modal images are first extracted and then fused during initial segmentation. Therefore, information contained in each modality can be retained as much as possible, thereby improving an expression capability of the extracted features. In addition, the mask obtained through skull stripping may be used to remove a phenomenon of false positives (where a false positive refers to erroneous determination of a category of a pixel, for example, a background pixel is determined to belong to a target object during segmentation) in the result obtained through the initial segmentation. Therefore, the capability of feature expression and the segmentation accuracy are improved in comparison with a solution in which the modal images are directly fused and subject to skull stripping and then segmented based on a result of the stripping.

Hereinafter an embodiment is illustrated for detailed description, based on the method described in the foregoing embodiment.

In this embodiment, it is taken as a specific example for illustration that the apparatus for segmenting the brain image is integrated into a network device, the first modal image is a T1 image in magnetic resonance modal images, the second modal image is a T1_IR image in magnetic resonance modal images, and the third modal image is a T2 image in magnetic resonance modal images. Reference is made to Figure 7. Generally, the T1 image is for tissue region segmentation, the T1_IR image is for encephalic region identification (that is, skull stripping), and the T2 image is for protein lesion region identification.

I. Training of a brain image segmentation model.

The brain image segmentation model may include a 3D fully convolutional network and a multi-branch fully convolutional network. The 3D fully convolutional network and the multi-branch fully convolutional network may be trained as follows.

(1) Training of the 3D fully convolutional network

First, the network device may acquire multiple first groups of sample images. Each first group of sample images may include images under multiple modalities (that is, multiple modal images) of a brain of a same object, such as a same person. The images are, for example, the T1 mage and the T1_IR image. In addition, actual categories of voxels are annotated for each modal image.

After the multiple first groups of sample images are acquired, the network device may determine a part of the first groups as a training dataset, and determine the other of the first groups as a verification dataset. For example, the first groups of sample images may be randomly divided into a training dataset and a verification dataset, between which a quantity ratio is 4: 1. Afterwards, a preset 3D fully convolutional network may be trained by using the training dataset, and verified by using the verification dataset, to obtain a trained 3D fully convolutional network.

A process of the network device training the preset 3D fully convolutional network by using the training dataset may include following steps A1 to A4.

In step A1, the network device fuses the T1 image and the T1_IR image in the first group of sample images, to obtain a fusion image sample.

For example, the network device may fuse the T1 image and the T1_IR image through adding features or splicing channels, to obtain a fusion image sample.

In step A2, the network device predicts categories of voxels in the fusion image sample through the preset 3D fully convolutional network, to obtain predicted values.

An encoder part of the 3D fully convolutional network may be implemented as a 3D residual network. In a specific embodiment, the encoder part may include a convolutional layer, multiple residual blocks, multiple down-sampling modules, and the like. A decoder part may be implemented as a classification network. In a specific embodiment, the decoder part may include multiple residual blocks and multiple deconvolution layers. In addition, the decoder part may further include a convolutional layer, multiple batch normalization (BN) layers, and an activation (ReLU) layer (where the BN and the activation function may alternatively be implemented in a same layer, i.e. a batch-normalization-and-activation layer, for example, details of which may refer to Figure 3, Figure 5, and Figure 9).

For example, the network device may import the fusion image into the 3D residual network of the 3D fully convolutional network, to extract feature information. Afterwards, the feature information is processed through the classification network of the 3D fully convolutional network, to predict a category of each voxel in the fusion image. Thereby, the predicted values of categories of voxels in the fusion image are obtained.

In step A3, the network device determines actual values of the categories of the voxels in the fusion image according to annotations on the modal images in the first group of sample images.

In step A4, the 3D fully convolutional network is converged according to the predicted values and the actual values through a loss function of cross entropy, to obtain the trained 3D fully convolutional network.

The trained 3D fully convolutional network may further be verified and adjusted by using the verification dataset, to improve accuracy of the two-dimensional segmentation model.

(2) Training of the multi-branch fully convolutional network.

First, the network device may acquire multiple second groups of sample images. Each second group of sample images may include images under multiple modalities of a brain of a same object, such as a same person. The images are, for example, the T1 image, the T1_IR image, and the T2 image. In addition, actual categories of voxels are annotated for each modal image.

Similar to the acquired first groups of sample images, after the multiple second groups of sample images are acquired, the network device may determine a part of the second groups as a training dataset, and determine the other of the second groups as a verification dataset. For example, the second groups of sample images may be randomly divided into a training dataset and a verification dataset, between which a quantity ratio is 4:1. Afterwards, a preset multi-branch fully convolutional network may be trained by using the training dataset, and verified by using the verification dataset, to obtain a trained multi-branch fully convolutional network.

A process of the network device training the preset multi-branch fully convolutional network by using the training dataset may include following steps B1 to B5.

In step B1, the network device fuses the T1 image and the T1_IR image in the second group of sample images, to obtain a fusion image sample.

For example, the T1 image and the T1_IR image may be fused through adding features or splicing channels, to obtain a fusion image sample.

In step B2, the network device extracts features from the fusion image sample and the third modal image sample separately, through a preset multi-branch fully convolutional network, and fuses the extracted features.

An encoder part of the multi-branch fully convolutional network may include an upper-branch 3D residual structure and a lower-branch 3D residual structure, and a decoder part of the multi-branch fully convolutional network may be implemented as a classification network module and the like. As a specific example, a structure of the multi-branch fully convolutional network may be as shown in Figure 4. The upper-branch 3D residual structure is configured to extract an upper-branch feature from the fusion image sample. The lower-branch 3D residual structure is configured to extract a lower-branch feature from the fusion image sample. The classification network module is configured to fuse the upper-branch feature and the lower-branch feature, classify the fusion feature obtained after the fusing, and perform segmentation (that is, implement step B3).

Network structures of the upper-branch 3D residual structure and the lower-branch 3D residual structure are similar. A quantity of convolutional layers, a quantity of residual blocks, and network parameters of the layers may be specifically set according to a requirement of a practical application. As an example, reference is made to Figure 4, Figure 5, and Figure 9. The structures of the upper-branch 3D residual structure and the lower-branch 3D residual structure may be as follows.

The upper-branch 3D residual structure includes: an upper-branch convolution module, a first upper-branch residual block, a first upper-branch down-sampling module, a second upper-branch residual block, a second upper-branch down-sampling module, a third upper-branch residual block, and a third upper-branch down-sampling module.

The lower-branch 3D residual structure includes: a lower-branch convolution module, a first lower-branch residual block, a first lower-branch down-sampling module, a second lower-branch residual block, a second lower-branch down-sampling module, a third lower-branch residual block, and a third lower-branch down-sampling module.

Processes of extracting features through the upper-branch 3D residual structure and the lower-branch 3D residual structure may refer to the foregoing embodiments. Details are not described again herein.

A structure of the classification network module may also be configured according to a requirement of a practical application. The structure may specifically include, for example, multiple convolutional layers, multiple residual blocks, multiple deconvolution layers, and multiple batch-normalization-and-activation layers. Details may refer to the foregoing embodiments, and are not described again herein.

In step B3, the network device classifies the fusion feature obtained after the fusing, to obtain a predicted value for a category.

As a specific example, the network device may classify the fusion feature through the classification network module in the multi-branch fully convolutional network, to obtain the predicted value for the category.

In step B4, the network device determines an actual value of the category of the fusion feature, according to annotations on the modal images in the second group of sample images.

The annotations of the modal images may be annotated by medical personnel according to a gold standard. The gold standard refers to a method for determining a disease in clinical medicine community.

In step B5, the network device makes the multi-branch fully convolutional network converged according to the predicted value and the actual value of the category through a loss function of multi-class categorization, to obtain the trained multi-branch fully convolutional network.

A common loss function such as CrossEntropy is prone to miss a region of white matter lesion, and therefore convergence may be conducted under a loss function of multi-class categorization. Specific parameters of the loss function of multi-class categorization may be set according to a requirement of a practical application. For example, in a case that there are N categories of brain regions in segmentation (for example, a protein lesion region and a gray matter region need to be distinguished), the loss function L (j) of multi-class categorization the following formula may be represented by a following equation.

$$L(j) = \frac{\sum_{i=1}^{N} p_{ij} g_{ij}}{\sum_{i=1}^{N} p_{ij} g_{ij} + 0.5 \sum_{i=1}^{N} \sum_{k \neq j}^{N} p_{ik}(1 - g_{ik}) + 0.5 \sum_{i=1}^{N}(1 - p_{ij}) g_{ij}}$$

$i$ is a voxel, $j$ and $k$ are categories of voxels, $p$ is a predicted category value, and g is an actual value of a category (for example, based on a gold standard provided by a doctor). For example, $p_{ij}$ represents "a predicted value of a category, when a pixel point $i$ serving as a voxel belonging to a category $j$", $g_{ij}$ represents "an actual value of a category, when a pixel point $i$ serving as a voxel belonging to the category $j$", and $p_{ik}$ represents "a predicted value of a category, when a pixel point $i$ serving as a voxel belonging to a category $k$", and $g_{ik}$ represents" an actual value of a category, when a pixel point $i$ serving as a voxel belonging to the category $k$".

The trained multi-branch fully convolutional network may further be verified and adjusted by using the verification dataset, to improve accuracy of the two-dimensional segmentation model.

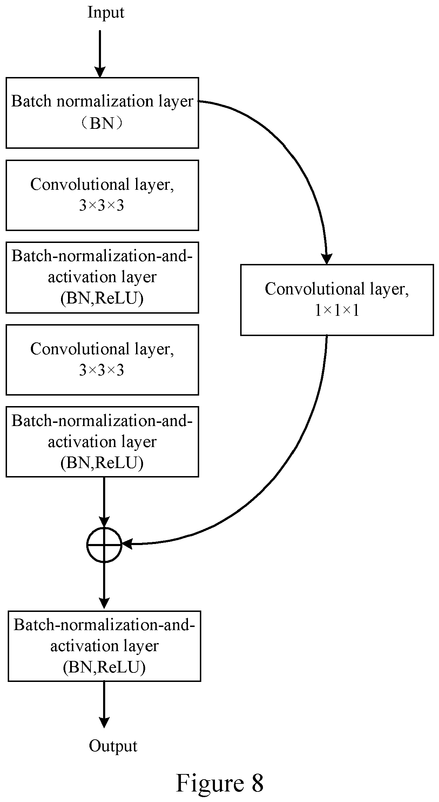

In addition, in order to further improve expression capabilities of the features, residual blocks in the 3D fully convolutional network and the multi-branch fully convolutional network (for example, all residual blocks in the 3D fully convolutional network, the first upper-branch residual block, the second upper-branch residual block, and the third upper-branch residual block in the upper-branch 3D residual structure, the first lower-branch residual block, the second lower-branch residual block, and the third lower-branch residual block in the lower-branch 3D residual structure, and all residual blocks in the classification network module) may adopt a residual unit structure in a 3D U-Net, and may alternatively adopt a residual block structure as shown in Figure 8. Reference is made to Figure 8. A residual block may include two branches. One branch may include sequentially a batch normalization (BN) layer, a convolutional layer with a convolution kernel of $3\times3\times3$, a batch-normalization-and-activation (BN, ReLU) layer, another convolutional layer with a convolution kernel of $3\times3\times3$, and another batch-normalization-and-activation layer. The other branch may include a convolutional layer with a convolution kernel of $1\times1\times1$. After input data of the residual block is separately processed through the two branches, processing results obtained by the two branches are fused. A result obtained through the fusing is processed through still another batch-normalization-and-activation layer, so as to obtain a final output of the residual block.

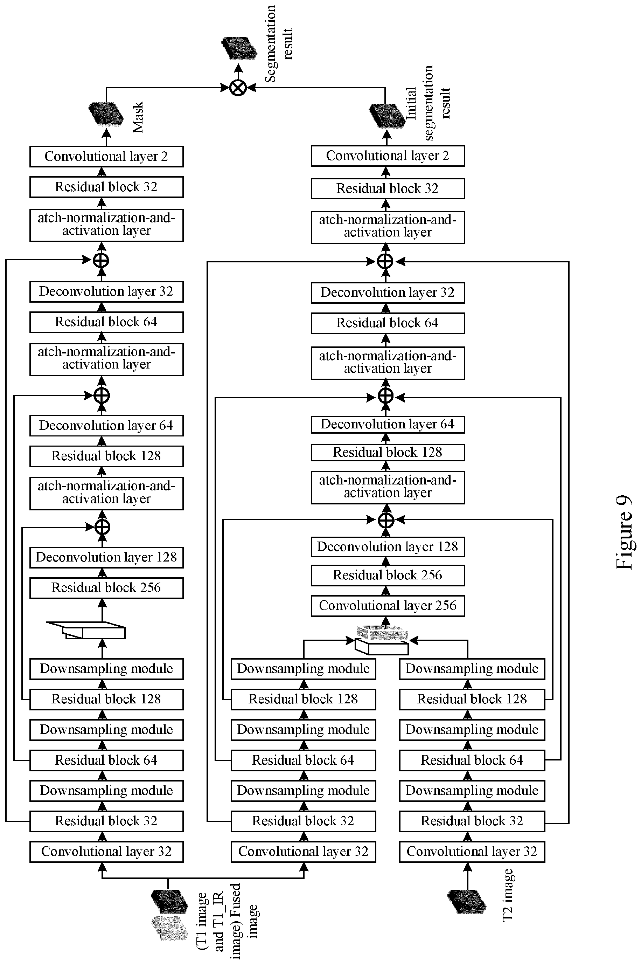

II. The group of to-be-segmented images may be segmented through the trained brain image segmentation model, to obtain a required segmentation result. Details may refer to Figure 9.

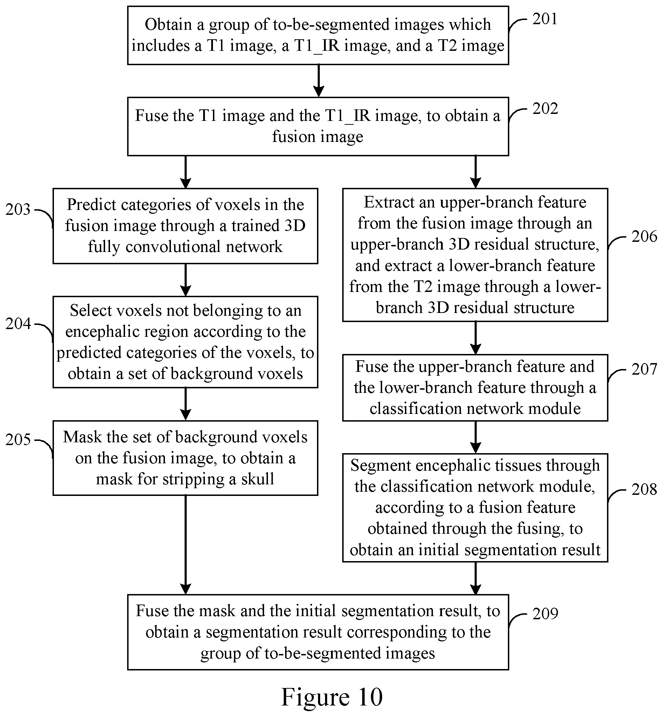

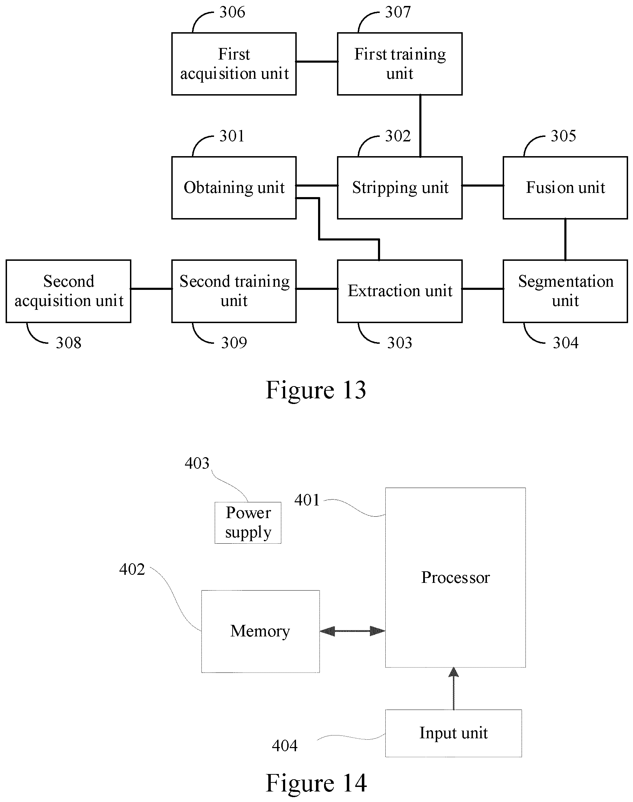

Reference is made to Figure 9 and Figure 10. A method for segmenting a brain image is performed by a network device as shown in Figure 14. A specific process may include following steps 201 to 209.

In step 201, a network device obtains a group of to-be-segmented images. The group of to-be-segmented images may include multiple modal images, such as a T1 image, a T1_IR image, and a T2 image.

As a specific example, a medical image collecting device, such as a CT or a magnetic resonance imaging device, may acquire images of a brain of who requires a brain image detection. Then, multiple acquired modal images related to the brain, such as a T1 image, a T1_IR image, and a T2 image, are provided to the network device as the group of to-be-segmented images.

In step 202, the network device fuses the T1 image and the T1_IR image, to obtain a fusion image.

There may be various specific fusion manners. For example, the network device may fuse the T1 image and the T1_IR image through adding features or splicing channels, to obtain the fusion image.

In step 203, the network device predicts categories of voxels in the fusion image through a trained 3D fully convolutional network. Then, the process goes to step 204.

For example, the network device extracts feature information from the fusion image through a 3D residual network in the trained 3D fully convolutional network, and then predicts a category of each voxel in the fusion image according to the obtained feature information through a classification network in the trained 3D fully convolutional network. It is taken as an example that a structure of the trained 3D fully convolutional network is as shown in Figure 9. In such case, a specific process may be as follows.

(1) Encoder part (3D residual network)

As shown in Figure 9, after fusing the T1 image and the T1_IR image, the network device may perform convolution on a fusion image through convolutional layer 32. A result of the convolution serves as an input of residual block 32 for feature extraction. Afterwards, a feature map outputted by the residual block 32 is down-sampled through a down-sampling module, and then serves as an input of residual block 64 for feature extraction of another scale. Similarly, a feature map outputted by the residual block 64 is down-sampled through another down-sampling module, and then serves as an input of residual block 128. After processing of the residual block 128, a feature map outputted by the residual block 128 is down-sampled through still another down-sampling module, and so forth. In such manner, the feature information can be obtained after feature extraction through multiple residual blocks of different sizes and down-sampling. The feature information includes a final output of the 3D residual network and multiple feature maps of different scales. The multiple feature maps are, for example, the feature map obtained by the residual block 32 in the residual network, the feature map obtained by the residual block 64 in the residual network, and the feature map obtained by the residual block 128 in the residual network.

In the foregoing encoding process, the down-sampling may be implemented in various manners. For example, the down-sampling may be performed through a maximum pooling layer. Alternative manners may be adopted. For example, the down-sampling may be implemented separately by using the structure as shown in Figure 6. Details may refer to the foregoing embodiments, and are not described again herein.

(2) Decoder part (classification network)

As shown in Figure 9, after obtaining the feature information, the network device may process the final output of the 3D residual network through residual block 256, imports a result of the processing into deconvolution layer 128 for deconvolution, and then fuses a result of the deconvolution and a feature map obtained by the residual block 128 in the residual network. After a result of the fusing is subject to batch normalization and introduction of a nonlinear factor, and then serves as an input of residual block 128 of the classification network for processing. Similarly, an output of the residual block 128 is subject to deconvolution through a deconvolution layer 64, and then a result of the deconvolution and a feature map obtained by the residual block 64 of the residual network may be fused. Similarly, a result of the fusing is subject to batch normalization and introduction of a nonlinear factor through a batch-normalization-and-activation layer, and then an output of the batch-normalization-and-activation layer may serve as an input of residual block 64 of the classification network. After the processing of the residual block 64 and a deconvolution layer 32, a result of deconvolution and a feature map obtained by the residual block 32 of the residual network are fused. Finally, a result of the fusing is processed by a batch-normalization-and-activation layer, residual block 32, and convolutional layer 2, so as to predict a category of each voxel in the fusion image. It is appreciated that a corresponding probability for the category may further be obtained. For example, it may be obtained that a category of a voxel K1 is "encephalic region" with a probability of 80%, a category of a voxel K2 is "encephalic region" with a probability of "60%", a category of a voxel K3 is "background region" with a probability of "95%", and so on.

In step 204, the network device selects voxels not belonging to an encephalic region according to the predicted categories of the voxels, to obtain a set of background voxels. Then the process goes to step 205.

For example, in a case that a category of the voxel K3 being "background region" with a probability of 95% is obtained in step 203, it may be determined that the voxel K3 does not belong to the encephalic region. Thereby, the voxel K3 is added into the set of background voxels.

In step 205, the network device masks the set of background voxels on the fusion image, to obtain a mask for stripping a skull. Then the process goes to step 209.

For example, the network device may set values of voxels in the encephalic region as 1, and set values of voxels in the background region as 0. Thereby, the mask for stripping the skull is obtained, as shown in Figure 9.

It is further taken as an example that the voxels K1 and K2 belong to the encephalic region and the voxel K3 belongs to the background region. In such case, values of the voxels K1 and K2 may be set as 1 and a value of the voxel K3 may be set as 0 on the fusion image. A similar operation may be performed on other voxels by analogy, so as to obtain the mask for stripping the skull. Thus, image values in the initial segmentation result can be retained in the encephalic region while all zeroed in the background region, by fusing (for example, are multiplying) the mask and the initial segmentation result in a subsequent step. In other words, a phenomenon of false positives in the initial segmentation result can be eliminated.

In step 206, the network device extracts an upper-branch feature from the fusion image (that is, a fusion image of the T1 image and the T1_IR image) through an upper-branch 3D residual structure in the trained multi-branch fully convolutional network, and extracts a lower-branch feature from the T2 image through a lower-branch 3D residual structure in the trained multi-branch fully convolutional network. Then the process goes to step 207. For example, details may be as follows.

(1) Extraction of the upper-branch feature

As shown in Figure 9, after fusing the T1 image and the T1_IR image, the network device may first perform convolution on the fusion image through an upper-branch convolution module. Then, the network device may encode an output of the upper-branch convolution module through a first upper-branch residual block, and down-sample a result of the encoding through a first upper-branch down-sampling module. Afterwards, the network device may continue to encode an output of the first upper-branch down-sampling module through a second upper-branch residual block, and down-sample a result of the encoding through a second upper-branch down-sampling module. Finally, the network device may encode an output of the second upper-branch down-sampling module through a third upper-branch residual block, and down-sample a result of the encoding through the third upper-branch down-sampling module. Thereby, the upper-branch feature can be obtained.

(2) Extraction of the lower-branch feature.

As shown in Figure 9, similar to extraction of the upper-branch feature, the network device may first perform convolution on the third modal image through a lower-branch convolution module. Then, the network device may encode an output of the lower-branch convolution module through a first lower-branch residual block, and down-sample a result of the encoding through a first lower-branch down-sampling module. Afterwards, the network device may continue to encode an output of the first lower-branch down-sampling module through a second lower-branch residual block, and down-sample a result of the encoding through a second lower-branch down-sampling module. Finally, the network device may encode an output of the second lower-branch down-sampling module through a third lower-branch residual block, and down-sample a result of the encoding through the third lower-branch down-sampling module. Thereby, the lower-branch feature can be obtained.

When extracting the upper-branch feature and the lower-branch feature, a result of the forgoing encoding may be down-sampled in various manners. For example, the result of encoding may be down-sampled through a maximum pooling layer. Alternative manners may be adopted. For example, convolution may be performed on the result separately through two parallel convolutional layers that are identical in a stepsize but different in convolution kernels, and then a result of the convolution is batch-normalized through a batch normalization layer, to achieve the down-sampling. Details may refer to the foregoing embodiments, and are not described again herein.

An order of implementing the step 203 and the step 206 may not be limited in this embodiment. In addition, an order of extracting the upper-branch feature and extracting the lower-branch feature may also not be limited in the step 206, which is not specifically described herein.

In step 207, the network device fuses the upper-branch feature and the lower-branch feature through a classification network module of the trained multi-branch fully convolutional network. Then the process goes to step 208.

As a specific embodiment, the upper-branch feature and the lower-branch feature may be fused through addition or multiplication on voxels, through the classification network module, as shown in Figure 9.

In step 208, the network device segments encephalic tissues through the classification network module in the trained multi-branch fully convolutional network, according to a fusion feature obtained through the fusing, to obtain an initial segmentation result. Then the process goes to step 209.

For example, the network device may classify the fusion feature through a classification network module, and then segment the encephalic tissues based on a result of the classifying, to obtain the initial segmentation result.

For example, a category of a voxel S 1 in the fusion feature is "white matter lesion" with a probability of 90%, a category of a voxel S2 is "gray matter" with a probability of 87%, a category of a voxel S3 is "white matter" with a probability of 79%, a category of a voxel S4 is "white matter lesion" with a probability of 88%, and a category of a voxel S5 is "gray matter" with a probability of 75%. In such case, the voxels S1 and S4 belonging to the category "white matter lesion" may be added into a same set, i.e. a "white matter lesion voxel set", the voxel S3 belonging to the category "white matter" may be added to a set, i.e. a "white matter voxel set", and the voxels S2 and S5 belonging to the category of "gray matter" may be added to a set, i.e. a "gray matter voxel set". Then, region segmentation is performed based on these voxel sets separately, so as to obtain a region of white matter lesion, a region of white matter, and a region of gray matter correspondingly.

Herein the white matter refers to cerebral white matter, and the gray matter refers to cerebral gray matter. Those skilled in the art have knowledge that a brain includes tens of billions of neurons which include cell bodies and nerve fibers, the cell body includes a cell nucleus (with a dark shade), and the nerve fiber includes a cytoplasm (with a light shade). In a brain, the cell bodies accumulate at a surface layer of the brain and present the dark shade, so that such part is generally called cerebral gray matter. The nerve fibers accumulate inside the brain and present the light shade, so that such part is generally called cerebral white matter.

In step 209, the network device fuses the mask obtained in the step 205 and the initial segmentation result obtained in the step 208, to obtain a segmentation result corresponding to the group of to-be-segmented images.

For example, the network device may perform element-wise multiplication on voxels of the mask and of the initial segmentation result, so as to obtain the segmentation result corresponding to the group of to-be-segmented images. A detailed process may be as follows.

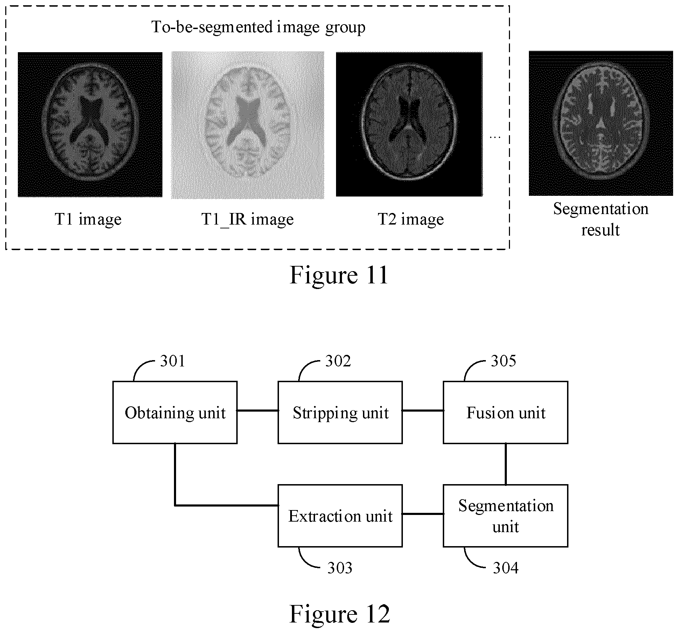

The network device obtains a value of each voxel on the mask and a value of each voxel in the initial segmentation result separately, establishes a first matrix according to the value of each voxel on the mask, and establishes a second matrix according to the value of each voxel in the initial segmentation result. Then, the network device calculates a dot product between on elements in the first matrix and elements in the second matrix, to obtain the segmentation result corresponding to the group of to-be-segmented images. Reference is made to Figure 11.

After obtained, the segmentation result may be provided to a corresponding user, such as medical personnel, for a further operation. For example, the medical personnel may identify a region of white matter lesion based on the segmentation result, to determine whether the segmentation is accurate or judge a condition of a patient. For example, the medical personnel may judge whether the patient suffers Parkinson's disease or multiple sclerosis, a degree of the disease, or the like.

In embodiments of the present disclosure, the group of to-be-segmented images is obtained. Afterwards, in one aspect, the skull stripping may be performed according to multiple modal images in the group of to-be-segmented images, to obtain the mask for stripping the skull. In another aspect, the features may be extracted from the multiple modal images separately and fused, then the encephalic tissues are segmented according to a fusion feature obtained through the fusing, and afterwards the initial segmentation result obtained through segmentation and the previously obtained mask are fused to obtain a final segmentation result. In this solution, the features of all modal images are first extracted and then fused during initial segmentation. Therefore, information contained in each modality can be retained as much as possible, thereby improving an expression capability of the extracted features. In addition, the mask obtained through skull stripping may be used to remove a phenomenon of false positives in the result obtained through the initial segmentation. Therefore, the capability of feature expression and the segmentation accuracy are improved in comparison with a solution in which the modal images are directly fused and subject to skull stripping and then segmented based on a result of the stripping.

In addition, this solution adopts the 3D fully convolutional network during the skull stripping. Therefore, it is unnecessary to configure a large quantity of software parameters and perform complicated operations for adjusting the parameters, in comparison with a solution adopting software to perform skull stripping. Therefore, implementation is simplified, and an undesirable stripping result due to improper configurations can be prevented, which facilities improving segmentation accuracy.

An apparatus for segmenting a brain image is further provided according to embodiments of the present disclosure, for better implementation of the foregoing method. The apparatus for segmenting the brain image may be integrated into a network device. The network device may be a server device, a terminal, or another device.

For example, reference is made to Figure 12. The apparatus for segmenting a brain image may include an obtaining unit 301, a stripping unit 302, an extraction unit 303, a segmentation unit 304, and a fusion unit 305.

(1) The obtaining unit 301

The obtaining unit 301 is configured to obtain a group of to-be-segmented images. The group of to-be-segmented images includes multiple modal images of a brain.

For example, the obtaining unit 301 may specifically be configured to receive the group of to-be-segmented images sent by a medical image collecting device, such as a CT or a magnetic resonance imaging device. Each group of to-be-segmented images may be acquired through the medical image collecting device performing collection on a brain of a same object, such as a same person.

(2) Stripping unit 302

The stripping unit 302 is configured to perform skull stripping according to the multiple modal images, to obtain a mask for stripping a skull.

All or some of the modal images may be used during the skull stripping. It is taken as an example that the multiple modal images include a first modal image, a second modal image, and a third modal image.

Accordingly, in a specific embodiment, the stripping unit 302 is configured to perform skull stripping according to the first modal image and the second modal image, to obtain the mask for stripping the skull.

In some specific embodiments, the stripping unit 302 may be configured to: fuse the first modal image and the second modal image, to obtain a fusion image; predict categories of voxels in the fusion image through a trained 3D fully convolutional network; select voxels not belonging to an encephalic region according to the predicted categories, to obtain a set of background voxels; and mask the set of background voxels on the fusion image, to obtain the mask for stripping the skull.

As a specific embodiment, the stripping unit 302 may be configured to set values of voxels in an encephalic region as 1, and set values of voxels in a background regions as 0, to obtain the mask for stripping the skull.

(3) Extraction unit 303

The extraction unit 303 is configured to extract features from the multiple modal images separately, and fuse the extracted features.

It is further taken as an example that the multiple modal images include a first modal image, a second modal image, and a third modal image. Accordingly, in a specific embodiment, the extraction unit 303 may be configured to extract the features from the first modal image, the second modal image, and the third modal image separately, and fuse the extracted features. As a specific embodiment, the operations may be as follows.

The first modal image and the second modal image are fused to obtain a fusion image. The features are extracted separately from the fusion image and the third modal image, through a trained multi-branch fully convolutional network. The extracted features are fused.

In a case that the stripping unit 302 has already fused the first modal image and the second modal image and stored the fusion image, the extraction unit 303 may directly read the stored fusion image, and may be not necessary to fuse the first modal image and the second modal image again.

Accordingly, in a specific embodiment, the extraction unit 303 is configured to: obtain the fusion image, extract features from the fusion image and the third modal image separately through a trained multi-branch fully convolutional network, and fuse the extracted features.

A structure of the trained multi-branch fully convolutional network may be configured according to a requirement of a practical application. For example, the trained multi-branch fully convolutional network may include an upper-branch 3D residual structure, a lower-branch 3D residual structure, and a classification network module.

Accordingly, in a specific embodiment, the extraction unit 303 may be configured to: extract an upper-branch feature from the fusion image through the upper-branch 3D residual structure; extract a lower-branch feature from the third modal image through the lower-branch 3D residual structure; and fuse the upper-branch feature and the lower-branch feature through the classification network module.

The upper-branch 3D residual structure may include an upper-branch convolution module, a first upper-branch residual block, a first upper-branch down-sampling module, a second upper-branch residual block, a second upper-branch down-sampling module, a third upper-branch residual block, and a third upper-branch down-sampling module.

Accordingly, in a specific embodiment, the extraction unit 303 may be configured to: perform convolution on the fusion image through the upper-branch convolution module; encode an output of the upper-branch convolution module through the first upper-branch residual block, and down-sample a result of the encoding through the first upper-branch down-sampling module; encode an output of the first upper-branch down-sampling module through the second upper-branch residual block, and down-sample a result of the encoding through the second upper-branch down-sampling module; and encode an output of the second upper-branch down-sampling module through the third upper-branch residual block, and down-sample a result of the encoding through the third upper-branch down-sampling module, to obtain the upper-branch feature.

The lower-branch 3D residual structure includes a lower-branch convolution module, a first lower-branch residual block, a first lower-branch down-sampling module, a second lower-branch residual block, a second lower-branch down-sampling module, a third lower-branch residual block, and a third lower-branch down-sampling module.

Accordingly, in a specific embodiment, the extraction unit 303 may be configured to: perform convolution on the third modal image through the lower-branch convolution module; encode an output of the lower-branch convolution module through the first lower-branch residual block, and down-sample a result of the encoding through the first lower-branch down-sampling module; encode an output of the first lower-branch down-sampling module through the second lower-branch residual block, and down-sample a result of the encoding through the second lower-branch down-sampling module; and encode an output of the second lower-branch down-sampling module through the third lower-branch residual block, and down-sample a result of the encoding through the third lower-branch down-sampling module, to obtain the lower-branch feature.

Network parameters of the upper-branch convolution module, the first upper-branch residual block, the second upper-branch residual block, the third upper-branch residual block, the lower-branch convolution module, the first lower-branch residual block, the second lower-branch residual block, and the third lower-branch residual block may be configured according to a requirement of a practical application. Details may refer to the foregoing embodiments, and are not described again herein.

In addition, when extracting the upper-branch feature and the lower-branch feature, a result of the forgoing encoding may be down-sampled in various manners. For example, the result of encoding may be down-sampled through a maximum pooling layer. Alternative manners may be adopted. For example, convolution may be performed on the result separately through two parallel convolutional layers that are identical in a stepsize but different in convolution kernels, and then a result of the convolution is batch-normalized through a batch normalization layer, to achieve the down-sampling. Details may refer to the foregoing embodiments, and are not described again herein.

(4) Segmentation unit 304

The segmentation unit 304 is configured to segment encephalic tissues according to a fusion feature obtained through the fusing, to obtain an initial segmentation result.

As a specific embodiment, the segmentation unit 304 may be configured to: classify the fusion feature through the classification network module, and segment the encephalic tissues based on a result of the classifying, to obtain the initial segmentation result.

(5) Fusion unit 305

The fusion unit 305 is configured to fuse the mask and the initial segmentation result, to obtain a segmentation result corresponding to the group of to-be-segmented images.

As a specific example, the fusion unit may be configured to: obtain a value of each voxel on the mask and a value of each voxel in the initial segmentation result separately, establish a first matrix according to the value of each voxel on the mask, establish a second matrix according to the value of each voxel in the initial segmentation result, and calculate a dot product between elements in the first matrix and elements in the second matrix, to obtain the segmentation result corresponding to the group of to-be-segmented images.

The trained 3D fully convolutional network may be trained by using multiple first groups of sample images. In a specific embodiment, the training may be performed by another device, and then the trained 3D fully convolutional network is provided to the apparatus for segmenting the brain image. Alternatively, the training may be performed by the apparatus itself. That is, as shown in Figure 13, the apparatus for segmenting the brain image may further include a first acquisition unit 306 and a first training unit 307.

The first acquisition unit 306 may be configured to acquire multiple first groups of sample images. The first group of sample images includes image samples, such as a first modal image sample for tissue region segmentation and a second modal image sample for encephalic region identification.

The first training unit 307 may be configured to: fuse the first modal image sample and the second modal image sample, to obtain a fusion image sample; predict categories of voxels in the fusion image sample through a preset 3D fully convolutional network, to obtain predicted values; obtain actual values for the categories of the voxels in the fusion image sample; and make the 3D fully convolutional network converged according to the predicted values and the actual values through a loss function of cross entropy, to obtain the trained 3D fully convolutional network.

Similarly, the trained multi-branch fully convolutional network may be trained by using multiple second groups of sample images. In a specific embodiment, the training may provide by another device, and then the trained multi-branch fully convolutional network is provided to the apparatus for segmenting the brain image. Alternatively, the training may be performed by the apparatus itself. That is, as shown in Figure 13, the apparatus for segmenting the brain image may further include a second acquisition unit 308 and a second training unit 309.

The second acquisition unit 308 may be configured to acquire multiple second groups of sample images. The second group of sample images includes a first modal image sample for tissue region segmentation, a second modal image sample for encephalic region identification, and a third modal image sample for protein lesion region identification.

The second training unit 309 may be configured to: fuse the first modal image sample and the second modal image sample, to obtain a fusion image sample; extract features from the fusion image sample and the third modal image sample separately through a preset multi-branch fully convolutional network; fuse the extracted features, and classify a fusion feature obtained after the fusing, to obtain a predicted value for a category; obtain an actual value for the category of the fusion feature; and make the multi-branch fully convolutional network converged according to the predicted value and the actual value category through a loss function of multi-class categorization, to obtain the trained multi-branch fully convolutional network.

During a specific implementation, the foregoing units may be implemented as independent entities, may be arbitrarily combined, or may be implemented as a same entity or several entities. Specific implementations of the foregoing units may refer to the foregoing method embodiments. Details are not described again herein.

In this embodiment, the group of to-be-segmented images is obtained. Afterwards, in one aspect, the skull stripping may be performed according to multiple modal images in the group of to-be-segmented images, to obtain the mask for stripping the skull. In another aspect, the features may be extracted from the multiple modal images separately and fused, then the encephalic tissues are segmented according to a fusion feature obtained through the fusing, and afterwards the initial segmentation result obtained through segmentation and the previously obtained mask are fused to obtain a final segmentation result. In this solution, the features of all modal images are first extracted and then fused during initial segmentation. Therefore, information contained in each modality can be retained as much as possible, thereby improving an expression capability of the extracted features. In addition, the mask obtained through skull stripping may be used to remove a phenomenon of false positives in the result obtained through the initial segmentation. Therefore, the capability of feature expression and the segmentation accuracy are improved in comparison with a solution in which the modal images are directly fused and subject to skull stripping and then segmented based on a result of the stripping.

A network device is further provided according to embodiments of the present disclosure. Reference is made to Figure 14, which is a schematic structural diagram of a network device according to an embodiment of the present disclosure.

The network device may include: a processor 401 including one or more processing cores, a memory 402 including one or more computer-readable storage media, a power supply 403, an input unit 404, and other components. Those skilled in the art can understand that the network device is not limited to the structure as shown in Figure 14, and may include more or fewer components than those as shown in the figure. Some components may be combined, and the components may be deployed in a different manner.

The processor 401 is a control center of the network device, and connects various parts of the entire network device via various interfaces and lines. The processor 401 implements various functions and data processing of the network device, by running or executing multiple instructions (software programs and/or modules) stored in the memory 402 and invoking data stored in the memory 402. Thereby, the processor 401 monitors the overall network device. The processor 401 may include one or more processing cores. The processor 401 may integrate an application processor and a modem processor. The application processor mainly processes and operates a storage medium, a user interface, an application program, and the like. The modem processor mainly processes wireless communication. It can be understood that the modem processor may not be integrated into the processor 401.

The memory 402 may be configured to store multiple instructions, software programs and modules. The processor 401 runs the multiple instructions, software programs and modules stored in the memory 402, to execute various function applications and data processing. The memory 402 may mainly include a program storage area and a data storage area. The program storage area may store and operate a storage medium, an application program required by at least one function (for example, a sound playback function and an image display function), and the like. The data storage area may store data created according to usage of the network device, and the like. In addition, the memory 402 may include a high speed random access memory, and may further include a non-volatile memory, such as at least one magnetic disk storage device, a flash memory, or another non-volatile solid-state storage device. Correspondingly, the memory 402 may further include a memory controller, to enable the processor 401 to access the memory 402.

The network device further includes the power supply 403 for supplying power to the components. The power supply 403 may be logically connected to the processor 401 via a power management storage medium, thereby implementing functions such as charging, discharging, and power consumption management through the power management storage medium. The power supply 403 may further include one or more direct-current or alternate-current power supplies, one or more re-charge storage mediums, one or more power-supply fault-detection circuits, one or more power-supply converters or inverters, one or more power-supply state indicators, or another component.

The network device may further include the input unit 404. The input unit 404 may be configured to receive inputted digit or character information, and generate a signal input related to user settings and function control, from a keyboard, a mouse, a joystick, optics, or a trackball.

Although not shown in the figure, the network device may further include a display unit, and the like, which is not described in detail herein. In a specific embodiment, the processor 401 in the network device may load executable files corresponding to a process of one or more application programs into the memory 402 according to following instructions, and runs application programs stored in the memory 402 to implement the various functions as follows.

A group of to-be-segmented images is obtained, where the group of to-be-segmented images includes multiple modal images of a brain. Skull stripping is performed according to the multiple modal images, to obtain a mask for stripping a skull. Features are extracted from the multiple modal images separately, and the extracted features are fused. Encephalic tissues are segmented according to a fusion feature obtained through the fusing, to obtain an initial segmentation result. The mask and the initial segmentation result are fused to obtain a segmentation result corresponding to the group of to-be-segmented images.

As a specific example, a first modal image and a second modal image may be fused, to obtain a fusion image. Then, in one aspect, categories of voxels in the fusion image are predicted through a trained 3D fully convolutional network, voxels not belonging to an encephalic region are selected according to the predicted categories to obtain a set of background voxels, and the set of background voxels are masked on the fusion image to obtain the mask for stripping the skull. In another aspect, an upper-branch feature is extracted from the fusion image through the upper-branch 3D residual structure of a trained multi-branch fully convolutional network, a lower-branch feature is extracted from the third modal image through the lower-branch 3D residual structure of the trained multi-branch fully convolutional network, then the upper-branch feature and the lower-branch feature are fused through a classification network module of the trained multi-branch fully convolutional network, a fusion feature obtained after the fusing is classified through the classification network module, and the encephalic tissues are segmented based on a result of the classifying to obtain the initial segmentation result.

The trained 3D fully convolutional network may be trained by using multiple first groups of sample images. The trained multi-branch fully convolutional network may be trained by using multiple second groups of sample images. In a specific embodiment, the training may be performed by another device, and then the trained 3D fully convolutional network is provided to the apparatus for segmenting the brain image. Alternatively, the training may be performed by the apparatus itself. That is, the processor 401 may further run the application programs stored in the memory 402, to implement following functions.

Multiple first groups of sample images are acquired. The first group of sample images includes image samples, such as a first modal image sample for tissue region segmentation and a second modal image sample for encephalic region identification. The first modal image sample and the second modal image sample are fused to obtain a fusion image sample. Categories of voxels in the fusion image sample are predicted through a preset 3D fully convolutional network, to obtain predicted values. Actual values for the categories of the voxels in the fusion image sample are obtained. The 3D fully convolutional network is converged according to the predicted values and the actual values through a loss function of cross entropy, to obtain the trained 3D fully convolutional network.

Further, multiple second groups of sample images are acquired. The second group of sample images includes a first modal image sample for tissue region segmentation, a second modal image sample for encephalic region identification, and a third modal image sample for protein lesion region identification. The first modal image sample and the second modal image sample are fused to obtain a fusion image sample. Features are extracted from the fusion image sample and the third modal image sample separately, through a preset multi-branch fully convolutional network. The features are fused, and a fusion feature obtained after the fusing is classified to obtain a predicted value for a category. An actual value for the category of the fusion feature is obtained. The multi-branch fully convolutional network is converged according to the predicted value and the actual value of the category through a loss function of multi-class categorization, to obtain the trained multi-branch fully convolutional network.

Specific implementations of the above operations may refer to the foregoing embodiments. Details are not described again herein.

In this embodiment, the network device obtains the group of to-be-segmented images. Afterwards, in one aspect, the skull stripping may be performed according to multiple modal images in the group of to-be-segmented images, to obtain the mask for stripping the skull. In another aspect, the features may be extracted from the multiple modal images separately and fused, then the encephalic tissues are segmented according to a fusion feature obtained through the fusing, and afterwards the initial segmentation result obtained through segmentation and the previously obtained mask are fused to obtain a final segmentation result. In this solution, the features of all modal images are first extracted and then fused during initial segmentation. Therefore, information contained in each modality can be retained as much as possible, thereby improving an expression capability of the extracted features. In addition, the mask obtained through skull stripping may be used to remove a phenomenon of false positives in the result obtained through the initial segmentation. Therefore, the capability of feature expression and the segmentation accuracy are improved in comparison with a solution in which the modal images are directly fused and subject to skull stripping and then segmented based on a result of the stripping.

Those skilled in the art can understand that, all or some steps of the methods in the foregoing embodiments may be implemented by using instructions, or implemented through instructions controlling relevant hardware. The instructions may be stored in a computer-readable storage medium, and loaded and executed by a processor.

Correspondingly, a storage medium is provided according to an embodiment of the present disclosure. The storage medium stores multiple instructions. The instructions are capable to be loaded by a processor, in order to perform the steps in any method for segmenting the brain image according to embodiments of the present disclosure. For example, the instructions may perform following steps.

A group of to-be-segmented images is obtained, where the group of to-be-segmented images includes multiple modal images of a brain. Skull stripping is performed according to the multiple modal images, to obtain a mask for stripping a skull. Features are extracted from the multiple modal images separately, and the extracted features are fused. Encephalic tissues are segmented according to a fusion feature obtained through the fusing, to obtain an initial segmentation result. The mask and the initial segmentation result are fused to obtain a segmentation result corresponding to the group of to-be-segmented images.

As a specific example, a first modal image and a second modal image may be fused, to obtain a fusion image. Then, in one aspect, categories of voxels in the fusion image are predicted through a trained 3D fully convolutional network, voxels not belonging to an encephalic region are selected according to the predicted categories to obtain a set of background voxels, and the set of background voxels are masked on the fusion image to obtain the mask for stripping the skull. In another aspect, an upper-branch feature is extracted from the fusion image through the upper-branch 3D residual structure of a trained multi-branch fully convolutional network, a lower-branch feature is extracted from the third modal image through the lower-branch 3D residual structure of the trained multi-branch fully convolutional network, then the upper-branch feature and the lower-branch feature are fused through a classification network module of the trained multi-branch fully convolutional network, a fusion feature obtained after the fusing is classified through the classification network module, and the encephalic tissues are segmented based on a result of the classifying to obtain the initial segmentation result.

The trained 3D fully convolutional network may be trained by using multiple first groups of sample images. The trained multi-branch fully convolutional network may be trained by using multiple second groups of sample images. In a specific embodiment, the training may be performed by another device, and then the trained 3D fully convolutional network is provided to the apparatus for segmenting the brain image. Alternatively, the training may be performed by the apparatus itself. That is, the processor 401 may further run the application programs stored in the memory 402, to implement following functions.

Multiple first groups of sample images are acquired. The first group of sample images includes image samples, such as a first modal image sample for tissue region segmentation and a second modal image sample for encephalic region identification. The first modal image sample and the second modal image sample are fused to obtain a fusion image sample. Categories of voxels in the fusion image sample are predicted through a preset 3D fully convolutional network, to obtain predicted values. Actual values for the categories of the voxels in the fusion image sample are obtained. The 3D fully convolutional network is converged according to the predicted values and the actual values through a loss function of cross entropy, to obtain the trained 3D fully convolutional network.

Further, multiple second groups of sample images are acquired. The second group of sample images includes a first modal image sample for tissue region segmentation, a second modal image sample for encephalic region identification, and a third modal image sample for protein lesion region identification. The first modal image sample and the second modal image sample are fused to obtain a fusion image sample. Features are extracted from the fusion image sample and the third modal image sample separately, through a preset multi-branch fully convolutional network. The features are fused, and a fusion feature obtained after the fusing is classified to obtain a predicted value for a category. An actual value for the category of the fusion feature is obtained. The multi-branch fully convolutional network is converged according to the predicted value and the actual value of the category through a loss function of multi-class categorization, to obtain the trained multi-branch fully convolutional network.

Specific implementations of the above operations may refer to the foregoing embodiments. Details are not described again herein.

The storage medium may include a read-only memory (ROM), a random access memory (RAM), a magnetic disk, an optical disc, or the like.

The instructions stored in the storage medium may perform the steps of any method for segmenting the brain image according to embodiments of the present disclosure. Therefore, the instructions can achieve beneficial effects that can be implemented by any method for segmenting the brain image provided according to embodiments of the present disclosure. Details may refer to the foregoing embodiments, and are not described again herein.

Hereinabove the method and the apparatus for segmenting the brain image and the storage medium according to embodiments of the present disclosure are described in detail. Although the principles and implementations of the present disclosure are described in specific examples herein, description of the foregoing embodiments is merely intended to help understand the method and the core idea thereof in the present disclosure.

**Claims**

1. A method for segmenting a brain image, wherein the method comprises:

   obtaining (101) a group of to-be-segmented images, wherein the group of to-be-segmented images comprises a plurality of modal images of a brain;
   performing (102) skull stripping according to the plurality of modal images, to obtain a mask for stripping a skull;
   extracting (103) features from the plurality of modal images separately, and fusing the extracted features to obtain a fusion feature;
   segmenting (104) encephalic tissues according to the fusion feature, to obtain an initial segmentation result; and
   fusing (105) the mask and the initial segmentation result, to obtain a segmentation result corresponding to the group of to-be-segmented images; wherein:

   the plurality of modal images comprises a first modal image for tissue region segmentation, a second modal image for encephalic region identification, and a third modal image for protein lesion region identification;
   performing (102) the skull stripping according to the plurality of modal images to obtain the mask for stripping the skull comprises: performing the skull stripping according to the first modal image and the second modal image, to obtain the mask for stripping the skull; and
   extracting (103) the features from the plurality of modal images separately comprises: extracting the features from the first modal image, the second modal image, and the third modal image separately; and
   **characterized in that**
   extracting (103) the features from the first modal image, the second modal image, and the third modal image separately comprises:

   fusing the first modal image and the second modal image, to obtain a fusion image; and
   extracting the features from the fusion image and the third modal image separately through a trained multi-branch fully convolutional network.

2. The method according to claim 1, wherein performing (102) the skull stripping according to the first modal image and the second modal image to obtain the mask for stripping the skull comprises:

   fusing the first modal image and the second modal image, to obtain a fusion image;
   predicting categories of voxels in the fusion image through a trained 3D fully convolutional network;
   selecting voxels not belonging to an encephalic region according to the predicted categories, to obtain a set of background voxels; and
   masking the set of background voxels on the fusion image, to obtain the mask for stripping the skull.

3. The method according to claim 1, wherein:

   the trained multi-branch fully convolutional network comprises an upper-branch 3D residual structure, a lower-branch 3D residual structure, and a classification network module; and
   extracting (103) the features from the fusion image and the third modal image separately through a trained multi-branch fully convolutional network and fusing the extracted features comprises:

extracting an upper-branch feature from the fusion image through the upper-branch 3D residual structure;
extracting a lower-branch feature from the third modal image through the lower-branch 3D residual structure; and
fusing the upper-branch feature and the lower-branch feature through the classification network module.

4. The method according to claim 3, wherein:

the upper-branch 3D residual structure comprises an upper-branch convolution module, a first upper-branch residual block, a first upper-branch down-sampling module, a second upper-branch residual block, a second upper-branch down-sampling module, a third upper-branch residual block, and a third upper-branch down-sampling module; and
extracting the upper-branch feature from the fusion image through the upper-branch 3D residual structure comprises:

performing convolution on the fusion image through the upper-branch convolution module;
encoding an output of the upper-branch convolution module through the first upper-branch residual block, and down-sampling a result of the encoding through the first upper-branch down-sampling module;
encoding an output of the first upper-branch down-sampling module through the second upper-branch residual block, and down-sampling a result of the encoding through the second upper-branch down-sampling module; and
encoding an output of the second upper-branch down-sampling module through the third upper-branch residual block, and down-sampling a result of the encoding through the third upper-branch down-sampling module, to obtain the upper-branch feature.

5. The method according to claim 3, wherein:

the lower-branch 3D residual structure comprises a lower-branch convolution module, a first lower-branch residual block, a first lower-branch down-sampling module, a second lower-branch residual block, a second lower-branch down-sampling module, a third lower-branch residual block, and a third lower-branch down-sampling module; and
extracting the lower-branch feature from the third modal image through the lower-branch 3D residual structure comprises:

performing convolution on the third modal image through the lower-branch convolution module;
encoding an output of the lower-branch convolution module through the first lower-branch residual block, and down-sampling a result of the encoding through the first lower-branch down-sampling module;
encoding an output of the first lower-branch down-sampling module through the second lower-branch residual block, and down-sampling a result of the encoding through the second lower-branch down-sampling module; and
encoding an output of the second lower-branch down-sampling module through the third lower-branch residual block, and down-sampling a result of the encoding through the third lower-branch down-sampling module, to obtain the lower-branch feature.

6. The method according to claim 4 or 5, wherein down-sampling any result comprises:

performing convolution on said result separately through two parallel convolutional layers that are identical in a stepsize and different in convolution kernels; and
batch-normalizing a result of the convolution through a batch normalization layer.

7. The method according to claim 6, wherein segmenting (104) the encephalic tissues according to the fusion feature to obtain the initial segmentation result comprises:

classifying the fusion feature through the classification network module; and
segmenting the encephalic tissues based on a result of the classifying, to obtain the initial segmentation result.

8. The method according to any one of claims 1 to 5, wherein the fusing (105) the mask and the initial segmentation result to obtain the segmentation result corresponding to the group of to-be-segmented images comprises:

obtaining a value of each voxel on the mask and a value of each voxel in the initial segmentation result separately;

establishing a first matrix according to the value of each voxel on the mask, and establishing a second matrix according to the value of each voxel in the initial segmentation result; and

calculating a dot product between elements in the first matrix and elements in the second matrix, to obtain the segmentation result corresponding to the group of to-be-segmented images.

9. The method according to claim 2, wherein predicting the categories of the voxels in the fusion image through the trained 3D fully convolutional network comprises:

acquiring a plurality of first groups of sample images, wherein the first group of sample images comprises a first modal image sample for tissue region segmentation and a second modal image sample for encephalic region identification;

fusing the first modal image sample and the second modal image sample, to obtain a fusion image sample;

predicting categories of voxels in the fusion image sample through a preset 3D fully convolutional network, to obtain predicted values;

obtaining actual values for the categories of the voxels in the fusion image sample; and

making the 3D fully convolutional network converged according to the predicted values and the actual values, through a loss function of cross entropy, to obtain the trained 3D fully convolutional network.

10. The method according to claim 1, wherein before extracting the features from the fusion image and the third modal image separately through the trained multi-branch fully convolutional network, the method comprises:

acquiring a plurality of second groups of sample images, wherein the second group of sample images comprises a first modal image sample for tissue region segmentation, a second modal image sample for encephalic region identification, and a third modal image sample for protein lesion region identification;

fusing the first modal image sample and the second modal image sample, to obtain a fusion image sample;

extracting features from the fusion image sample and the third modal image sample separately, through a preset multi-branch fully convolutional network;

fusing extracted features, and classify a fusion feature obtained after the fusing, to obtain a predicted value for a category;

obtaining an actual value for the category of the fusion feature; and

making the multi-branch fully convolutional network converged according to the predicted value and the actual value category, through a loss function of multi-class categorization, to obtain the trained multi-branch fully convolutional network.

11. A method for segmenting a brain image, wherein the method comprises:

obtaining (101) a group of to-be-segmented images, wherein the group of to-be-segmented images comprises a plurality of modal images of a brain;

performing (102) skull stripping according to the plurality of modal images to obtain a mask for stripping a skull;

extracting (103) features from the plurality of modal images separately, and fusing the extracted features to obtain a fusion feature;

segmenting (104) encephalic tissues according to the fusion feature to obtain an initial segmentation result; and

fusing (105) the mask and the initial segmentation result to obtain a segmentation result corresponding to the group of to-be-segmented images;

**characterized in that**

not all modal images in the plurality of the modal images are utilized during the skull stripping.

12. A storage medium, storing a plurality of instructions, wherein:

the instructions are capable to be loaded by a processor, to perform the method according to any one of claims 1 to 11.

13. A network device, comprising a processor and a memory, wherein:

the memory is configured to store a plurality of instructions; and

the instructions when executed by the processor configure the processor to perform the method according to any one of claims 1 to 11.

**Patentansprüche**

1. Verfahren zum Segmentieren eines Gehirnbildes, wobei das Verfahren umfasst:

Erhalten (101) einer Gruppe von zu segmentierenden Bildern, wobei die Gruppe von zu segmentierenden Bildern eine Mehrzahl von modalen Bildern eines Gehirns umfasst;
Durchführen (102) eines Schädelstrippings entsprechend der Mehrzahl von modalen Bildern, um eine Maske zum Strippen eines Schädels zu erhalten;
separates Extrahieren (103) von Merkmalen aus der Mehrzahl von modalen Bildern, und Fusionieren der extrahierten Merkmale, um ein Fusionsmerkmal zu erhalten;
Segmentieren (104) von Gehirngeweben entsprechend dem Fusionsmerkmal, um ein anfängliches Segmentierungsergebnis zu erhalten; und
Fusionieren (105) der Maske und des anfänglichen Segmentierungsergebnisses, um ein Segmentierungsergebnis zu erhalten, das zu der Gruppe von zu segmentierenden Bildern korrespondiert; wobei:

die Mehrzahl von modalen Bildern ein erstes modales Bild zur Segmentierung einer Geweberegion, ein zweites modales Bild zur Identifizierung einer Gehirnregion, und ein drittes modales Bild zur Identifizierung einer Proteinläsionsregion umfasst;
das Durchführen (102) des Schädelstrippings entsprechend der Mehrzahl von modalen Bildern, um die Maske zum Strippen des Schädels zu erhalten, umfasst: Durchführen des Schädelstrippings entsprechend dem ersten modalen Bild und dem zweiten modalen Bild, um die Maske zum Strippen des Schädels zu erhalten; und
das separate Extrahieren (103) der Merkmale aus der Mehrzahl von modalen Bildern umfasst: separates Extrahieren der Merkmale aus dem ersten modalen Bild, dem zweiten modalen Bild und dem dritten modalen Bild; und
**dadurch gekennzeichnet, dass**
das separate Extrahieren (103) der Merkmale aus dem ersten modalen Bild, dem zweiten modalen Bild und dem dritten modalen Bild umfasst:

Fusionieren des ersten modalen Bildes und des zweiten modalen Bildes, um ein Fusionsbild zu erhalten; und
separates Extrahieren der Merkmale aus dem Fusionsbild und dem dritten modalen Bild durch ein trainiertes Mehrzweig-Vollfaltungsnetzwerk.

2. Verfahren nach Anspruch 1, wobei das Durchführen (102) des Schädelstrippings entsprechend dem ersten modalen Bild und dem zweiten modalen Bild, um die Maske zum Strippen des Schädels zu erhalten, umfasst:

Fusionieren des ersten modalen Bildes und des zweiten modalen Bildes, um ein Fusionsbild zu erhalten;
Vorhersagen von Kategorien von Voxeln in dem Fusionsbild durch ein trainiertes 3D-Vollfaltungsnetzwerk;
Auswählen von Voxeln, die nicht zu einer Gehirnregion gehören, entsprechend den vorhergesagten Kategorien, um einen Satz von Hintergrundvoxeln zu erhalten; und
Maskieren des Satzes von Hintergrundvoxeln auf dem Fusionsbild, um die Maske für das Stripping des Schädels zu erhalten.

3. Verfahren nach Anspruch 1, wobei:

das trainierte Mehrzweig-Vollfaltungsnetzwerk eine Oberzweig-3D-Reststruktur, eine Unterzweig-3D-Reststruktur, und ein Klassifizierungsnetzwerkmodul umfasst; und
das separate Extrahieren (103) der Merkmale aus dem Fusionsbild und dem dritten modalen Bild durch ein trainiertes Mehrzweig-Vollfaltungsnetzwerk und das Fusionieren der extrahierten Merkmale umfasst:

Extrahieren eines Oberzweig-Merkmals aus dem Fusionsbild durch die Oberzweig-3D-Reststruktur;
Extrahieren eines Unterzweig-Merkmals aus dem dritten modalen Bild durch die Unterzweig-3D-Reststruktur; und
Fusionieren des Oberzweig-Merkmals und des Unterzweig-Merkmals durch das Klassifizierungsnetzwerkmodul.

4. Verfahren nach Anspruch 3, wobei:

die Oberzweig-3D-Reststruktur ein Oberzweig-Faltungsmodul, einen ersten Oberzweig-Restblock, ein erstes Oberzweig-Abwärtsabtastungsmodul, einen zweiten Oberzweig-Restblock, ein zweites Oberzweig-Abwärtsabtastungsmodul, einen dritten Oberzweig-Restblock, und ein drittes Oberzweig-Abwärtsabtastungsmodul umfasst; und

das Extrahieren des Oberzweig-Merkmals aus dem Fusionsbild durch die Oberzweig-3D-Reststruktur umfasst:

Durchführen einer Faltung an dem Fusionsbild durch das Oberzweig-Faltungsmodul;
Kodieren einer Ausgabe des Oberzweig-Faltungsmoduls durch den ersten Oberzweig-Restblock, und Abwärtsabtasten eines Ergebnisses der Kodierung durch das erste Oberzweig-Abwärtsabtastmodul;
Kodieren einer Ausgabe des ersten Oberzweig-Abwärtsabtastmoduls durch den zweiten Oberzweig-Restblock und Abwärtsabtasten eines Ergebnisses der Kodierung durch das zweite Oberzweig-Abwärtsabtastmodul; und
Kodieren einer Ausgabe des zweiten Oberzweig-Abwärtsabtastungsmoduls durch den dritten Oberzweig-Restblock und Abwärtsabtasten eines Ergebnisses der Kodierung durch das dritte Oberzweig-Abwärtsabtastmodul, um das Oberzweig-Merkmal zu erhalten.

5. Verfahren nach Anspruch 3, wobei:

die Unterzweig-3D-Reststruktur ein Unterzweig-Faltungsmodul, einen ersten Unterzweig-Restblock, ein erstes Unterzweig-Abwärtsabtastungsmodul, einen zweiten Unterzweig-Restblock, ein zweites Unterzweig-Abwärtsabtastungsmodul, einen dritten Unterzweig-Restblock, und ein drittes Unterzweig-Abwärtsabtastungsmodul umfasst; und

das Extrahieren des Unterzweig-Merkmals aus dem dritten modalen Bild durch die Unterzweig-3D-Reststruktur umfasst:

Durchführen einer Faltung an dem dritten modalen Bild durch das Unterzweig-Faltungsmodul;
Kodieren einer Ausgabe des Unterzweig-Faltungsmoduls durch den ersten Unterzweig-Restblock, und Abwärtsabtasten eines Ergebnisses der Kodierung durch das erste Unterzweig-Abwärtsabtastmodul;
Kodieren einer Ausgabe des ersten Unterzweig-Abwärtsabtastmoduls durch den zweiten Restblock und Abwärtsabtasten eines Ergebnisses der Kodierung durch das zweite Unterzweig-Abwärtsabtastmodul; und
Kodieren einer Ausgabe des zweiten Unterzweig-Abwärtsabtastungsmoduls durch den dritten Unterzweig-Restblock und Abwärtsabtasten eines Ergebnisses der Kodierung durch das dritte Unterzweig-Abwärtsabtastmodul, um das Unterzweig-Merkmal zu erhalten.

6. Verfahren nach Anspruch 4 oder 5, wobei das Abwärtsabtasten eines beliebigen Ergebnisses umfasst:

Durchführen einer Faltung des Ergebnisses separat durch zwei parallele Faltungsschichten, die identisch in einer Schrittweite und unterschiedlich in den Faltungskernen sind; und
Stapel-Normalisierung eines Ergebnisses der Faltung durch eine Stapel-Normalisierungsschicht.

7. Verfahren nach Anspruch 6, wobei die Segmentierung (104) der Hirngewebe gemäß dem Fusionsmerkmal, um das anfängliche Segmentierungsergebnis zu erhalten, umfasst:

Klassifizierung des Fusionsmerkmals durch das Klassifizierungsnetzwerkmodul; und
Segmentierung der Gehirngewebe auf der Grundlage eines Ergebnisses der Klassifizierung, um das anfängliche Segmentierungsergebnis zu erhalten.

8. Verfahren nach einem der Ansprüche 1 bis 5, wobei das Fusionieren (105) der Maske und des anfänglichen Segmentierungsergebnisses, um das Segmentierungsergebnis zu erhalten, das zu der Gruppe von zu segmentierenden Bildern korrespondiert, umfasst:

separates Erhalten eines Wertes von jeden Voxel auf der Maske und eines Wertes von jedem Voxel in dem anfänglichen Segmentierungsergebnis;
Einrichten einer ersten Matrix entsprechend dem Wert von jedem Voxel auf der Maske, und Einrichten einer zweiten Matrix entsprechend dem Wert von jedem Voxel in dem anfänglichen Segmentierungsergebnis; und
Berechnen eines Punktprodukts zwischen Elementen in der ersten Matrix und Elementen in der zweiten Matrix, um das Segmentierungsergebnis zu erhalten, das zu der Gruppe der zu segmentierenden Bilder korrespondiert.

9. Verfahren nach Anspruch 2, wobei das Vorhersagen der Kategorien der Voxel in dem Fusionsbild durch das trainierte 3D-Vollfaltungsnetzwerk umfasst:

Erfassen einer Mehrzahl von ersten Gruppen von Probenbildern, wobei die erste Gruppe von Probenbildern eine erste modale Bildprobe für die Segmentierung der Geweberegion und eine zweite modale Bildprobe für die Identifizierung der Gehirnregion umfasst;
Fusionieren der ersten modalen Bildprobe und der zweiten modalen Bildprobe, um eine Fusionsbildprobe zu erhalten;
Vorhersagen von Kategorien von Voxeln in der Fusionsbildprobe durch ein voreingestelltes 3D-Vollfaltungsnetzwerk, um vorhergesagte Werte zu erhalten;
Erhalten von tatsächlichen Werten für die Kategorien der Voxel in der Fusionsbildprobe; und
Machen, dass das 3D-Vollfaltungsnetzwerk entsprechend den vorhergesagten Werten und den tatsächlichen Werten konvergiert, durch eine Verlustfunktion der Kreuzentropie, um das trainierte 3D-Vollfaltungsnetzwerk zu erhalten.

10. Verfahren nach Anspruch 1, wobei das Verfahren vor dem separaten Extrahieren der Merkmale aus dem Fusionsbild und dem dritten modalen Bild durch das trainierte Mehrzweig-Vollfaltungsnetz umfasst:

Erfassen einer Mehrzahl von zweiten Gruppen von Probenbildern, wobei die zweite Gruppe von Probenbildern eine erste modale Bildprobe für die Segmentierung der Geweberegion, eine zweite modale Bildprobe für die Identifizierung der Gehirnregion, und eine dritte modale Bildprobe für die Identifizierung einer Proteinläsionsregion umfasst;
Fusionieren der ersten modalen Bildprobe und der zweiten modalen Bildprobe, um eine Fusionsbildprobe zu erhalten;
separates Extrahieren von Merkmalen aus der Fusionsbildprobe und der dritten modalen Bildprobe durch ein voreingestelltes Mehrzweig-Vollfaltungsnetzwerk;
Fusionieren von extrahierten Merkmalen und Klassifizieren eines nach der Fusion erhaltenen Fusionsmerkmals, um einen vorhergesagten Wert für eine Kategorie zu erhalten;
Erhalten eines tatsächlichen Wertes für die Kategorie des Fusionsmerkmals; und
Machen, dass das Mehrzweig-Vollfaltungsnetzwerk entsprechend dem vorhergesagten Wert und der Kategorie des tatsächlichen Wertes konvergiert, durch eine Verlustfunktion der Mehrklassenkategorisierung, um das trainierte Mehrzweig-Vollfaltungsnetzwerk zu erhalten.

11. Verfahren zum Segmentieren eines Gehirnbildes, wobei das Verfahren umfasst:

Erhalten (101) einer Gruppe von zu segmentierenden Bildern, wobei die Gruppe von zu segmentierenden Bildern eine Mehrzahl von modalen Bildern eines Gehirns umfasst;
Durchführen (102) eines Schädelstrippings entsprechend der Mehrzahl von modalen Bildern, um eine Maske zum Strippen eines Schädels zu erhalten;
separates Extrahieren (103) von Merkmalen aus der Mehrzahl von modalen Bildern, und Fusionieren der extrahierten Merkmale, um ein Fusionsmerkmal zu erhalten;
Segmentieren (104) von Gehirngeweben entsprechend dem Fusionsmerkmal, um ein anfängliches Segmentierungsergebnis zu erhalten; und
Fusionieren (105) der Maske und des anfänglichen Segmentierungsergebnisses, um ein Segmentierungsergebnis zu erhalten, das zu der Gruppe von zu segmentierenden Bildern korrespondiert;
**dadurch gekennzeichnet, dass**
nicht alle modalen Bilder in der Mehrzahl von modalen Bildern während des Schädelstrippings verwendet werden.

12. Speichermedium, das eine Mehrzahl von Anweisungen speichert, wobei:
die Anweisungen von einem Prozessor geladen werden können, um das Verfahren nach einem der Ansprüche 1 bis 11 durchzuführen.

13. Netzwerkgerät, das einen Prozessor und einen Speicher umfasst, wobei:

der Speicher so konfiguriert ist, dass er eine Mehrzahl von Anweisungen speichert; und
die Anweisungen, wenn sie von dem Prozessor ausgeführt werden, den Prozessor so konfigurieren, dass er das Verfahren nach einem der Ansprüche 1 bis 11 durchführt.

**Revendications**

1. Procédé de segmentation d'une image cérébrale, dans lequel le procédé comprend:

   obtenir (101) un groupe d'images à segmenter, dans lequel le groupe d'images à segmenter comprend une pluralité d'images modales d'un cerveau;
   effectuer (102) une extraction encéphalique (skull stripping) selon la pluralité d'images modales pour obtenir un masque pour l'extraction d'un crâne;
   extraire (103) séparément des caractéristiques de la pluralité d'images modales, et fusionner les caractéristiques extraites pour obtenir une caractéristique de fusion;
   segmenter (104) des tissus encéphaliques selon la caractéristique de fusion pour obtenir un résultat de segmentation initial; et
   fusionner (105) le masque et le résultat de segmentation initial pour obtenir un résultat de segmentation correspondant au groupe d'images à segmenter; dans lequel:

   la pluralité d'images modales comprend une première image modale pour la segmentation de région tissulaire, une deuxième image modale pour l'identification de région encéphalique, et une troisième image modale pour l'identification de région de lésion protéique;
   la mise en oeuvre (102) de l'extraction encéphalique selon la pluralité d'images modales pour obtenir le masque pour l'extraction du crâne comprend: effectuer l'extraction encéphalique selon la première image modale et la deuxième image modale pour obtenir le masque pour l'extraction du crâne; et
   l'extraction (103) séparée des caractéristiques de la pluralité d'images modales comprend: l'extraction séparée des caractéristiques de la première image modale, de la deuxième image modale et de la troisième image modale; et
   **caractérisé par le fait que** l'extraction (103) séparée des caractéristiques de la première image modale, de la deuxième image modale et de la troisième image modale comprend:

   fusionner la première image modale et la deuxième image modale pour obtenir une image de fusion; et
   extraire séparément les caractéristiques de l'image de fusion et de la troisième image modale via un réseau multi-branches entièrement convolutif entraîné.

2. Procédé selon la revendication 1, dans lequel la mise en oeuvre (102) de l'extraction encéphalique selon la première image modale et la deuxième image modale pour obtenir le masque pour l'extraction du crâne comprend:

   fusionner la première image modale et la deuxième image modale pour obtenir une image de fusion;
   prédire des catégories de voxels dans l'image de fusion via un réseau 3D entièrement convolutif entraîné;
   sélectionner des voxels qui n'appartiennent pas à une région encéphalique selon les catégories prédites, pour obtenir un ensemble de voxels d'arrière-plan; et
   masquer l'ensemble des voxels d'arrière-plan sur l'image de fusion pour obtenir le masque pour l'extraction du crâne.

3. Procédé selon la revendication 1, dans lequel

   le réseau multi-branches entièrement convolutif entraîné comprend une structure résiduelle 3D de branche supérieure, une structure résiduelle 3D de branche inférieure et un module de réseau de classification; et
   l'extraction (103) séparée des caractéristiques de l'image de fusion et de la troisième image modale via un réseau multi-branches entièrement convolutif entraîné et la fusion des caractéristiques extraites comprend:

   extraire une caractéristique de branche supérieure de l'image de fusion via la structure résiduelle 3D de branche supérieure;
   extraire une caractéristique de branche inférieure de la troisième image modale via la structure résiduelle 3D de branche inférieure; et
   fusionner la caractéristique de branche supérieure et la caractéristique de branche inférieure via le module de réseau de classification.

4. Procédé selon la revendication 3, dans lequel:

   la structure résiduelle 3D de branche supérieure comprend un module de convolution de branche supérieure, un premier bloc résiduel de branche supérieure, un premier module de sous-échantillonnage de branche supérieure, un deuxième bloc résiduel de branche supérieure, un deuxième module de sous-échantillonnage de branche supérieure, un troisième bloc résiduel de branche supérieure et un troisième module de sous-échantillonnage de branche supérieure; et

l'extraction de la caractéristique de branche supérieure de l'image de fusion via la structure résiduelle 3D de branche supérieure comprend:

effectuer une convolution sur l'image de fusion via le module de convolution de branche supérieure;
coder une sortie du module de convolution de branche supérieure via le premier bloc résiduel de branche supérieure, et sous-échantillonner un résultat du codage via le premier module de sous-échantillonnage de branche supérieure;
coder une sortie du premier module de sous-échantillonnage de branche supérieure via le deuxième bloc résiduel de branche supérieure, et sous-échantillonner un résultat du codage via le deuxième module de sous-échantillonnage de branche supérieure; et
coder une sortie du deuxième module de sous-échantillonnage de branche supérieure via le troisième bloc résiduel de branche supérieure, et sous-échantillonner un résultat du codage via le troisième module de sous-échantillonnage de branche supérieure pour obtenir la caractéristique de branche supérieure.

5.    Procédé selon la revendication 3, dans lequel:

la structure résiduelle 3D de branche inférieure comprend un module de convolution de branche inférieure, un premier bloc résiduel de branche inférieure, un premier module de sous-échantillonnage de branche inférieure, un deuxième bloc résiduel de branche inférieure, un deuxième module de sous-échantillonnage de branche inférieure, un troisième bloc résiduel de branche inférieure et un troisième module de sous-échantillonnage de branche inférieure; et
l'extraction de la caractéristique de branche inférieure de la troisième image modale via la structure résiduelle 3D de branche inférieure comprend:

effectuer une convolution sur la troisième image modale via le module de convolution de branche inférieure;
coder une sortie du module de convolution de branche inférieure via le premier bloc résiduel de branche inférieure, et sous-échantillonner un résultat du codage via le premier module de sous-échantillonnage de branche inférieure;
coder une sortie du premier module de sous-échantillonnage de branche inférieure via le deuxième bloc résiduel de branche inférieure, et sous-échantillonner un résultat du codage via le deuxième module de sous-échantillonnage de branche inférieure; et
coder une sortie du deuxième module de sous-échantillonnage de branche inférieure via le troisième bloc résiduel de branche inférieure, et sous-échantillonner un résultat du codage via le troisième module de sous-échantillonnage de branche inférieure pour obtenir la caractéristique de branche inférieure.

6.    Procédé selon la revendication 4 ou 5, dans lequel le sous-échantillonnage d'un résultat quelconque comprend:

effectuer une convolution sur ledit résultat séparément à travers deux couches de convolution parallèles qui sont identiques en termes de pas et différentes en termes de noyaux de convolution; et
normaliser par lots un résultat de la convolution via une couche de normalisation par lots.

7.    Procédé selon la revendication 6, dans lequel la segmentation (104) des tissus encéphaliques selon la caractéristique de fusion pour obtenir le résultat de segmentation initial comprend:

classer la caractéristique de fusion par l'intermédiaire du module de réseau de classification; et
segmenter les tissus encéphaliques sur la base d'un résultat de la classification pour obtenir le résultat de segmentation initial.

8.    Procédé selon l'une quelconque des revendications 1 à 5, dans lequel la fusion (105) du masque et du résultat de segmentation initial pour obtenir le résultat de segmentation correspondant au groupe d'images à segmenter comprend:

obtenir séparément une valeur de chaque voxel sur le masque et une valeur de chaque voxel dans le résultat de segmentation initial;

établir une première matrice en fonction de la valeur de chaque voxel sur le masque, et établir une deuxième matrice en fonction de la valeur de chaque voxel dans le résultat de segmentation initial; et

calculer un produit scalaire entre des éléments de la première matrice et des éléments de la deuxième matrice pour obtenir le résultat de segmentation correspondant au groupe d'images à segmenter.

9. Procédé selon la revendication 2, dans lequel la prédiction des catégories des voxels dans l'image de fusion via le réseau 3D entièrement convolutif entraîné comprend:

acquérir une pluralité de premiers groupes d'images d'échantillon, le premier groupe d'images d'échantillon comprenant un premier échantillon d'image modal pour la segmentation de région tissulaire et un deuxième échantillon d'image modal pour l'identification de région encéphalique;

fusionner le premier échantillon d'image modal et le deuxième échantillon d'image modal pour obtenir un échantillon d'image de fusion;

prédire des catégories de voxels dans l'échantillon d'image de fusion par l'intermédiaire d'un réseau 3D entièrement convolutif prédéfini, pour obtenir des valeurs prédites;

obtenir des valeurs réelles pour les catégories des voxels dans l'échantillon d'image de fusion; et

faire converger le réseau 3D entièrement convolutif en fonction des valeurs prédites et des valeurs réelles, via une fonction de perte d'entropie croisée, pour obtenir le réseau 3D entièrement convolutif entraîné.

10. Procédé selon la revendication 1, dans lequel, avant d'extraire séparément les caractéristiques de l'image de fusion et de la troisième image modale via le réseau multi-branches entièrement convolutif entraîné, le procédé comprend:

acquérir une pluralité de deuxièmes groupes d'images d'échantillon, le deuxième groupe d'images d'échantillon comprenant un premier échantillon d'image modal pour la segmentation de région tissulaire, un deuxième échantillon d'image modal pour l'identification de région encéphalique, et un troisième échantillon d'image modal pour l'identification de région de lésion protéique;

fusionner le premier échantillon d'image modal et le deuxième échantillon d'image modal pour obtenir un échantillon d'image de fusion;

extraire séparément des caractéristiques de l'échantillon d'image de fusion et du troisième échantillon d'image modal, par l'intermédiaire d'un réseau multi-branches entièrement convolutif prédéfini;

fusionner des caractéristiques extraites, et classer une caractéristique de fusion obtenue après la fusion, pour obtenir une valeur prédite pour une catégorie;

obtenir une valeur réelle pour la catégorie de la caractéristique de fusion; et

faire converger le réseau multi-branches entièrement convolutif en fonction de la valeur prédite et de la catégorie de valeur réelle, par l'intermédiaire d'une fonction de perte de catégorisation multi-classe, pour obtenir le réseau multi-branches entièrement convolutif entraîné.

11. Procédé de segmentation d'une image cérébrale, dans lequel le procédé comprend:

obtenir (101) un groupe d'images à segmenter, le groupe d'images à segmenter comprenant une pluralité d'images modales d'un cerveau;

effectuer (102) une extraction encéphalique selon la pluralité d'images modales pour obtenir un masque pour l'extraction d'un crâne;

extraire (103) séparément des caractéristiques de la pluralité d'images modales, et fusionner les caractéristiques extraites pour obtenir une caractéristique de fusion;

segmenter (104) des tissus encéphaliques selon la caractéristique de fusion pour obtenir un résultat de segmentation initial; et

fusionner (105) le masque et le résultat de segmentation initial pour obtenir un résultat de segmentation correspondant au groupe d'images à segmenter;

**caractérisé par le fait que** ce ne sont pas toutes les images modales parmi la pluralité des images modales qui sont utilisées pendant l'extraction encéphalique.

12. Support de stockage qui stocke une pluralité d'instructions, dans lequel:
les instructions peuvent être chargées par un processeur pour mettre en oeuvre le procédé selon l'une quelconque des revendications 1 à 11.

13. Dispositif de réseau comprenant un processeur et une mémoire, dans lequel:

la mémoire est configurée pour stocker une pluralité d'instructions; et
les instructions, lorsqu'elles sont exécutées par le processeur, configurent le processeur pour mettre en oeuvre le procédé selon l'une quelconque des revendications 1 à 11.

Figure 1

Obtain a group of to-be-segmented images which includes multiple modal images of a brain — 101

Perform skull stripping according to the multiple modal images, to obtain a mask for stripping a skull — 102

Extract features from the multiple modal images separately, and fusing the extracted features — 103

Segment encephalic tissues according to a fusion feature obtained through the fusing, to obtain an initial segmentation result — 104

Fuse the mask and the initial segmentation result to obtain a segmentation result corresponding to the group of to-be-segmented images — 105

Figure 2

Fused image → Convolutional layer 32 → Residual block 32 → Downsampling module → Residual block 64 → Downsampling module → Residual block 128 → Downsampling module → Residual block 256 → Deconvolution layer 128 → ⊕ → Batch-normalization-and-activation layer → Residual block 128 → Deconvolution layer 64 → ⊕ → Batch-normalization-and-activation layer → Residual block 64 → Deconvolution layer 32 → ⊕ → Batch-normalization-and-activation layer → Residual block 32 → Convolutional layer 2 → Mask

Encoder part (three-dimensional residual network)

Decoder part (classification network)

Figure 3

Initial segmentation result

Convolutional layer 2

Residual block 32

Batch-normalization-and-activation layer

Deconvolution layer 32

Residual block 64

Batch-normalization-and-activation layer

Deconvolution layer 64

Residual block 128

Batch-normalization-and-activation layer

Deconvolution layer 128

Residual block 256

Convolutional layer 256

Decoder part (classification network module)

Downsampling module

Residual block 128

Downsampling module

Residual block 64

Downsampling module

Residual block 32

Convolutional layer 32

Fusion image

Encoder part (upper-branch three-dimensional residual structure)

Encoder part (lower-branch three-dimensional residual structure)

Downsampling module

Residual block 128

Downsampling module

Residual block 64

Downsampling module

Residual block 32

Convolutional layer 32

Third modal image

Figure 4

Figure 5

Encoding result

| Con 3×3×3, s=2×2×2 | | Con 1×1×1, s=2×2×2 |
|---|---|---|

⊕

BN, ReLU

Downsampling result

Figure 6

T1 image                T1_IR image                T2 image

Figure 7

Input

Batch normalization layer
（BN）

Convolutional layer,
3×3×3

Batch-normalization-and-
activation layer
(BN,ReLU)

Convolutional layer,
3×3×3

Batch-normalization-and-
activation layer
(BN,ReLU)

Convolutional layer,
1×1×1

$\oplus$

Batch-normalization-and-
activation layer
(BN,ReLU)

Output

Figure 8

Segmentation result

Mask

Convolutional layer 2

Residual block 32

atch-normalization-and-activation layer

Deconvolution layer 32

Residual block 64

atch-normalization-and-activation layer

Deconvolution layer 64

Residual block 128

atch-normalization-and-activation layer

Deconvolution layer 128

Residual block 256

Downsampling module

Residual block 128

Downsampling module

Residual block 64

Downsampling module

Residual block 32

Convolutional layer 32

(T1 image and T1_IR image) Fused image

Initial segmentation result

Convolutional layer 2

Residual block 32

atch-normalization-and-activation layer

Deconvolution layer 32

Residual block 64

atch-normalization-and-activation layer

Deconvolution layer 64

Residual block 128

atch-normalization-and-activation layer

Deconvolution layer 128

Residual block 256

Convolutional layer 256

Downsampling module

Residual block 128

Downsampling module

Residual block 64

Downsampling module

Residual block 32

Convolutional layer 32

Downsampling module

Residual block 128

Downsampling module

Residual block 64

Downsampling module

Residual block 32

Convolutional layer 32

T2 image

Figure 9

Obtain a group of to-be-segmented images which includes a T1 image, a T1_IR image, and a T2 image ⌐ 201

Fuse the T1 image and the T1_IR image, to obtain a fusion image ⌐ 202

203 ⌐ Predict categories of voxels in the fusion image through a trained 3D fully convolutional network

Extract an upper-branch feature from the fusion image through an upper-branch 3D residual structure, and extract a lower-branch feature from the T2 image through a lower-branch 3D residual structure ⌐ 206

204 ⌐ Select voxels not belonging to an encephalic region according to the predicted categories of the voxels, to obtain a set of background voxels

Fuse the upper-branch feature and the lower-branch feature through a classification network module ⌐ 207

205 ⌐ Mask the set of background voxels on the fusion image, to obtain a mask for stripping a skull

Segment encephalic tissues through the classification network module, according to a fusion feature obtained through the fusing, to obtain an initial segmentation result ⌐ 208

Fuse the mask and the initial segmentation result, to obtain a segmentation result corresponding to the group of to-be-segmented images ⌐ 209

Figure 10

To-be-segmented image group

T1 image　　　　T1_IR image　　　　T2 image

Segmentation result

Figure 11

Obtaining unit — 301

Stripping unit — 302

Fusion unit — 305

Extraction unit — 303

Segmentation unit — 304

Figure 12

306

First acquisition unit

307

First training unit

301

Obtaining unit

302

Stripping unit

305

Fusion unit

Second acquisition unit

Second training unit

Extraction unit

Segmentation unit

308

309

303

304

Figure 13

403

Power supply

401

402

Processor

Memory

404

Input unit

Figure 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910070881

**Non-patent literature cited in the description**

- Deep Learning and Texture-Based Semantic Label Fusion for Brain Tumor Segmentation. **L. VID-YARATNE et al.** Progress in Biomedical Optics and Imaging. SPIE-International Society for Optical Engineering, 27 February 2018, vol. 10575